# EUROPEAN PATENT APPLICATION

(11) **EP 1 850 299 A2**
(43) Date of publication of application: **31.10.2007**
(21) Application number: 07008341.5
(22) Date of filing: 24.04.2007
(51) Int. Cl.: G07G 1/00, G01G 19/415

(54) **Self-checkout terminal**

(30) Priority: 27.04.2006 JP 2006123392; 27.04.2006 JP 2006123395
(71) Applicant: Toshiba TEC Kabushiki Kaisha, Tokyo 141-8664 (JP)
(72) Inventor: Oosugi, Akihiro, c/o Intellectual Property Division, Toshiba Tec Kabushiki Kaisha, Shinagawa-ku Tokyo 141-8664 (JP); Sugita, Nobuhiro, c/o Intellectual Property Division Toshiba Tec Kabushiki Kaisha, Shinagawa-ku Tokyo 141-8664 (JP); Oomura, Kiyoshi, c/o Intellectual Property Division Toshiba Tec Kabushiki Kaisha, Shinagawa-ku Tokyo 141-8664 (JP); Uchiyama, Makoto, c/o Intellectual Property Division Toshiba Tec Kabushiki Kaisha, Shinagawa-ku Tokyo 141-8664 (JP); Ookuma, Yumiko, c/o Intellectual Property Division Toshiba Tec Kabushiki Kaisha, Shinagawa-ku Tokyo 141-8664 (JP); Sasaki, Yasutsuga, c/o Intellectual Property Division Toshiba Tec Kabushiki Kaisha, Shinagawa-ku Tokyo 141-8664 (JP); IIzuka, Takashi, c/o Intellectual Property Division Toshiba Tec Kabushiki Kaisha, Shinagawa-ku Tokyo 141-8664 (JP)
(74) Representative: Kramer - Barske - Schmidtchen

(57) **Abstract**

A process is executed in which a weight value transmitted from a scale device having a placing part for placing an article, is stored in a memory as a former weight under predetermined condition, when an article code is input through a user interface, a price and a weight range corresponding to the input article code is searched from an article data file, a weight check is executed in which whether or not a weight difference between a weight value acquired by placing the article code input article on the placing part and the former weight stored in the memory falls within the searched weight range, and an article information registration process is executed only when the weight check is gone through. As for the predetermined condition may include not only before the first input of the article code in one transaction and when it is determined that the weight value is within the weight range as a result of the weight check process, but also when it is determined that the weight value received from the scale device decreases compared to the former weight.

## Description

### BACKGROUND OF THE INVENTION

### FIELD OF THE INVENTION

This invention relates to a self-checkout terminal which allows a customer to execute a self-checkout.

### DISCUSSION OF THE BACKGROUND

In recent years, a self-checkout terminal which allows a customer to execute a self-checkout has been developed. Various user interfaces for executing an article sales data processing are arranged such that an operation by a customer, information offering for the customer, and a receipt issuance are enabled. Refer Japanese Laid-Open Publication No. P2004-086728. As the various user interfaces, it is provided that an article code reader such as a barcode reader or the like, a display for displaying information, an input part for input Ling information, a settlement part for enabling a settlement such as a receiving/dispensing device for coins and bank notes, a receipt printer, and so on.

Further, a measurement is required to prevent a wrongdoing, that is, an article which a customer brings home should be limited to the article, an article code of which was read by the article code reader, that is, should be limited to the article purchased through the article sales data processing. As for such measurement, Japanese Laid-Open Publication No.Hei 09-245251 discloses an invention that prevents a wrongdoing by checking a weight of the article, the article code of which was read by the article code reader. A methodology disclosed in the second patent document is to acquire weight data of an article from an article data file such as a PLU (Price Look-Up) file and so on based on an article code, which is read by the article code reader, to weigh the weight of the article after the article code was read, and to execute a weight check to see an identity between the weight specified by the weight data and the actual weighed weight.

When considering a natural operation by the self-checkout terminal, it is a desirable operation that articles are kept on the scale device after article codes of which were read by the article code reader. That is, the placing part on which the code read articles are placed should be a placing part of the scale device and it would be natural to carry away all the articles from the placing part when a settlement process is finished.

However, if such operation is adopted, all the read articles must be kept on the placing part of the scale device until one transaction is finished. If a read article is removed from the placing part before the transaction is finished, a weighed result by the scale device would be changed and a correct weight check will not be performed. Therefore, a conventional self-checkout terminal takes a measurement such that an error announcement is executed and a following article sales data processing is suspended when a code read article is removed from the placing part before the transaction is finished. This measurement does not bring a fundamental solution for the problem that a correct weight check cannot be executed when a code input article is removed from the placing part before the transaction is finished. However, it is at least possible to inform a customer of a reason of error by providing an error announcement.

In contrast, as a result of test operations of a self-checkout terminal, the applicant of the present application got to know such a case that the code read article is removed from the placing part before the transaction is completed, happens frequently, especially, happens for a customer with children. That is, there were many cases that a child removes a snack and so on from the placing part, which was once placed on the placing part, during an operation of the self-checkout terminal by the parents.

In view of the above situation, a fundamental measurement is desired for the problem where a correct weight check cannot be executed due to a change of a weighed value by the scale device when a code input article is removed before one transaction is completed.

### SUMMARY OF THE INVENTION

An object of the present invention is to execute a weight check correctly even if an article, an article code of which has been read and is placed on a placing part, is removed from the placing part before a transaction is terminated.

A self-checkout terminal of the present invention, including (a) a settlement terminal having a user interface for inputting an article code, and (b) a scale device providing a placing part for placing an article, an article code of which has been input through the user interface, for measuring a weight of the article placed on the placing part, and for transmitting the measured weight value to the settlement terminal wherein it is executed to store a weight value transmitted from the scale device as a former weight under predetermined condition, wherein when an article code is input through the user interface, i) a search process for searching a corresponding price and a weight range from an article data file rewritably storing a price and a weight corresponding to each article code, ii) a weight check process for determining whether a difference of weight value between a weight value transmitted from the scale device and a former weight stored in the memory is included within a weight range acquired by the searched process, and iii) an article information registration process for storing article information which includes the input article code and the searched price in the memory on condition that it is determined that the weight value is included within the weight range as a result of the weight check process, are executed, and wherein the predetermined condition is one of before a first input of an article code at a transaction, when it is determined that the weight value is included within the weight range as a result of the weight check process, and when it is determined that a weight value received from the scale device decreases with respect to the former weight.

Another aspect of the self-checkout terminal of the present invention, including (a) a settlement terminal having a user interface for inputting an article code, (b) a scale device providing a placing part for placing an article, an article code of which has been input through the user interface, and for measuring a weight of the article placed on the placing part and transmitting the measured weight value to the settlement terminal, and (c) an announcement part for executing an error announcement wherein it is executed to store a weight value transmitted from the scale device as a former weight under a predetermined condition, wherein when an article code is input through the user interface, i) a search process for searching a corresponding price and a weight range from an article data file rewritably storing a price and a weight corresponding to each article code, ii) a weight check process for determining whether a difference of weight value between a weight value transmitted from the scale device and a former weight stored in the memory is included within a weight range acquired by the searched process, and iii) an article information registration process for storing article information which includes the input article code and the searched price in the memory on condition that it is determined that the weight value is included within the weight range as a result of the weight check process, are executed, wherein it is executed to cancel a transition to the article information registration process by allowing the announcement part to execute an error announcement when it is determined that a weight value received from the scale device decreases with respect to a former weight after an input of an article code through the user interface, wherein when a weight value received from the scale device after the error announcement increases, it is executed to resume a transition to the article information registration process by executing the weight check process using the increased weight value, and wherein the predetermined condition is either before a first input of an article code at a transaction, or when it is determined that the weight value is included within the weight range as a result of the weight check process.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
Fig. 1 is an exemplary diagram showing a whole system structure of an embodiment of the present invention;
Fig. 2 is a plane view showing a layout of each part of a self-checkout system;
Fig. 3 is a perspective view showing a self-checkout terminal;
Fig. 4 is a perspective view showing a scale device;
Fig. 5 is a perspective view showing a status in which a shopping bag is held to a holding arm;
Fig. 6 is a block diagram showing an electrical hardware structure of a settlement terminal;
Fig. 7(A) is an exemplary diagram showing an example of an article data file (PLU (Price Look-Up) file); .
Fig. 7(B) is an exemplary diagram showing an example of an article data file (weight data file);
Fig. 8 is an exemplary diagram showing an electrical hardware structure of the scale device;
Fig. 9 is a flow chart showing a flow of a self-checkout process in the self-checkout terminal;
Fig. 10 is an exemplary diagram showing a display transition example when a self-checkout process is executed in the self-checkout terminal;
Fig. 11 is an exemplary diagram showing an initial display and a reading confirmation display with respect to an article to be placed on a temporal placing table;
Fig. 12 is a flow chart showing a flow of a receiving process of a weight data acquired from the scale device, the flow is included in a weight check process;
Fig. 13 (A) is an exemplary diagram showing an example of a weight check file;
Fig. 13 (B) is an exemplary diagram showing another example of the weight check file;
Fig. 14 is a flow chart showing an example of the weight check process flow;
Fig. 15 is an exemplary diagram showing an example of a weight check error display as a result of the weight check process when an article, a barcode of which has not been read yet, is placed on the placing table of the scale device;
Fig. 16 is a flowchart showing an example of a weight check process flow at an article bagging stand-by phase;
Fig. 17 is a flow chart showing another example of the weight check process flow;
Fig. 18 is an exemplary diagram showing an example of a weight check error display as a result of the weight check process when an article is removed from the placing table;
Fig. 19 is a flow chart showing another example of the weight check process flow at the article bagging stand-by phase;
Fig. 20(A) is an exemplary diagram showing an initial display and a reading confirmation display with respect to a weight check exempted article (a placing place is the placing table);
Fig. 20(B) is an exemplary diagram showing an initial display and a reading confirmation display with respect to a weight check exempted article (a placing place is a floor);
Fig. 21 is an exemplary diagram showing a display transition display when a self-checkout process is executed for a packed article;
Fig. 22 is an exemplary diagram showing an example of a cancellation display which appears when a cancellation button is touched;
Fig. 23 (A) is an exemplary diagram showing an example of a shop assistant calling display (calling selection) which appears when a calling button is touched; and
Fig. 23(B) is an exemplary diagram showing an example of a shop assistant calling display (on calling), which appears when a calling button is touched.

### DETAILED DESCRIPTION OF THE PREFERRED EMBODIMENTS

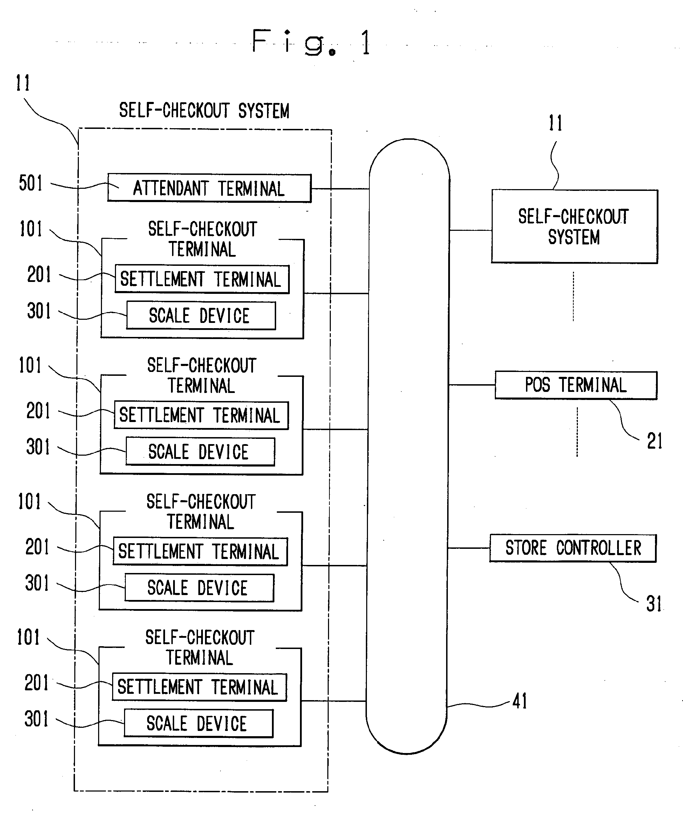

An embodiment of the present invention will be described with reference to Figs. 1 to 23.

The embodiment will be explained according to the following items.
1. SYSTEM STRUCTURE
   (1) OUTLINE OF THE SYSTEM STRUCTURE
   (2) SELF-CHECKOUT TERMINAL
2. SELF-CHECKOUT PROCESS
   (1) BASIC ROUTINE OF THE SELF-CHECKOUT PROCESS
   (2) DISPLAY TRANSISION AT THE SELF-CHECKOUT PROCESS
   (3) WEIGHT CHECK PROCESS
      (i) FIRST EXAMPLE
      (ii) ANOTHER EXAMPLE
      (iii) SKIP OF THE WEIGHT CHECK PROCESS
   (4) ARTICLE INFORMATION REGISATRATION THROUGH DISPLAY INPUT
   (5) PACKED ARTICLE INFORMATION REGISTRATION
      (i) INPUT METHOD FOR THE PACKED ARTICLE
      (ii) SECOND WEIGHT CHECK PROCESS
   (6) CANCELLATION ASSIGNMENT
   (7) CALLING ASSIGNMENT
   (8) SETTLEMENT

Hereinafter, an explanation will be executed according to the above items.

### 1. SYSTEM STRUCTURE

### (1) OUTLINE OF THE SYSTEM STRUCTURE

Fig. 1 is an exemplary diagram showing a whole system structure. The system of the embodiment is constituted such that a plurality of self-checkout systems 11, a plurality of POS terminals 21, and a store controller 31 are connected through a communication network 41.

The self-checkout system 11 is constituted that an attendant terminal 501 is assigned to a plurality of self-checkout terminals 101. The self-checkout terminal 101 consists of a settlement terminal 201 and a scale device 301.

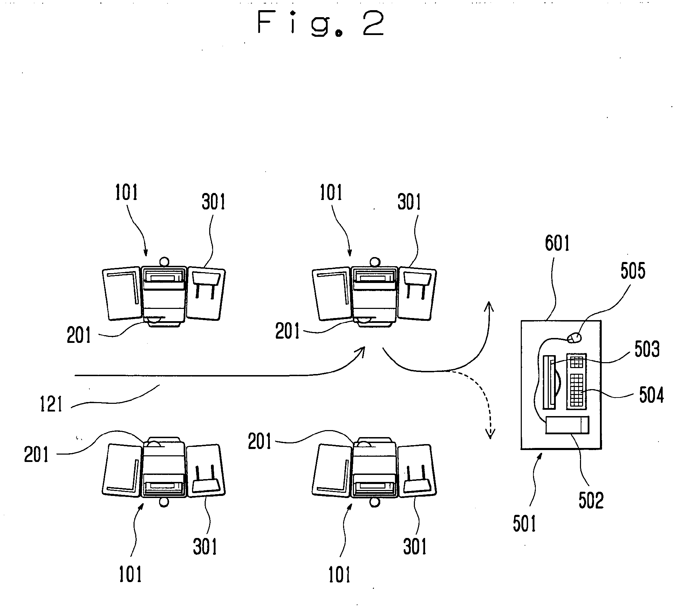

Fig. 2 is a plane view showing a layout of each part of the self-checkout system 11. One attendant terminal 501 is assigned to four self-checkout terminals 101 in the self-checkout system 11 of the present invention. In this self-checkout system 101, a pair of self-checkout terminals 101 is arranged parallel with a customer passage 121, and a front side of each pair of self-checkout terminals 101 faces each other with having the customer passage 121 in-between.

The attendant terminal 501 is arranged at an end of the customer passage 121. The attendant terminal 501 is a form of a personal computer by its appearance, which has a main part 502, a display 503 as a display part, a keyboard 504, and a pointing device 505 as a controller.

A customer is accessible to every self-checkout terminal 101 via the customer passage 121. For instance, when the customer wants to use a self-checkout terminal 101 arranged at a left bottom part of the customer passage from the customer's view, that is, arranged at a right upper part in Fig. 2, the customer passes through the customer passage 121, stands in front of the self-checkout terminal 101, and leave to go round to a left side or a right side of an attendant terminal 601 after he/she completes a self-checkout process.

### (2) SELF-CHECKOUT TERMINAL

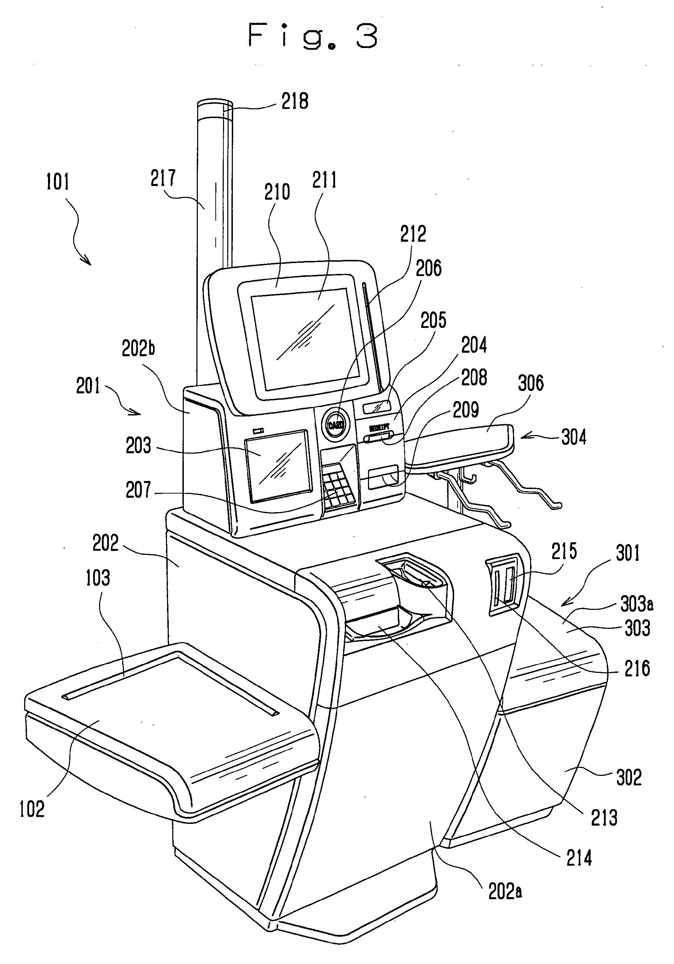

Fig. 3 is a perspective view showing the self-checkout terminal 101. The self-checkout terminal 101 consists of the settlement terminal 201 and the scale device 301.

The settlement terminal 201 has a housing 202, at a left side of which an article basket placing table 102 is extended. A protrusion part 103 which decides a position of the basket is formed in L-shape on an upper surface of the article basket placing table 102.

The housing 202 of the settlement terminal 201 constitutes a base hosing 202a placed on the floor surface and a smaller upper housing 202b placed on an upper surface of the base housing 202a. A front surface of the base housing 202a inclines backward so that a projected area of the base housing 202a is harrowed as going downward. Thus, the base housing 202a is offsetting backward as going downward.

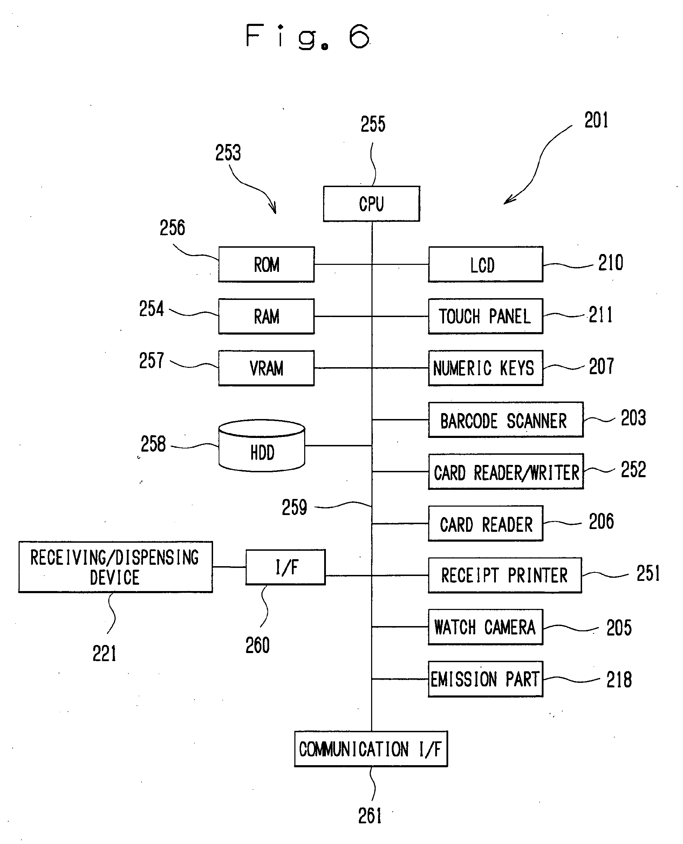

Various user interfaces are provided at the upper housing 202b. That is, a barcode scanner 203 as an article code reader at a left side, a printer cover 204 and a watch camera 205 at a right side are arranged, and a card reader 206 as a settlement part and numeric keys 207 are arranged between the barcode scanner 203, and the printer cover 204 and the watch camera 205. The barcode scanner 203 is an upright type scanner functioning as the article code reader for reading an article code affixed to an article. A receipt issuer 208 is provided to the printer cover 204. A receipt printer 251 (see Fig. 6) is housed in the upper housing 202b at a backside part of the printer cover 204. A receipt (not shown) printed by the receipt printer 251 is issued from the receipt issuer 208. The printer cover 204 is releasably attached with respect to the upper housing 202b, and is released by a pulling operation of a flap 209. The card reader 206 executes radio communication with a non-contacting IC card (not shown), and reads and writes on the non-contacting IC card. The non-contacting IC card is, for example, able to store electronic money, which has equivalent value to cash. An antenna (not shown) is housed in a backward part of the part where the representation of "card" is shown in the circle shown in Fig. 3, and the antenna performs radio communication with the non-contacting IC card. The numeric keys 207 are used for entering a personal identification number at a settlement with the non-contacting IC card.

A LCD 210 as a display part having a liquid crystal panel is fixed to the upper housing 202b. The LCD 210 has a touch panel 211 as an input part on its displaying surface and a card reading ditch 212 on its right side. A card reader/writer 252 (see Fig. 6) as a settlement part is housed in the card reading ditch 212. The card reader/writer 252 reads information such as a card number and a personal identification number, which stores in a magnetic card such as a credit card and the like.

A receiving/dispensing device 221 (see Fig. 6) for coins and bank notes is housed in the base housing 202a. As a part of the receiving/dispensing device 221, a coin inlet 213 is arranged at a central upper surface of the base housing 202a and a coin dispenser 214 is arranged at a right side of the coin inlet 213. Further, a note inlet 215 and a note dispenser 216 are arranged at a front right upper part of the base housing 202a. This receiving/dispensing device 221 has a mechanism which executes coins and bank notes treatment, and a controller which controls this mechanism (both not shown). Since processes executed by a mechanism and a controller like these are well known, an explanation will be omitted.

A display pole 217 as an announcement part for displaying a current status of the self-checkout terminal 101 is set up from a back .surface of the base housing 202a. The display pole 217 has an emission part 218, a tip of which emits blue and red selectively.

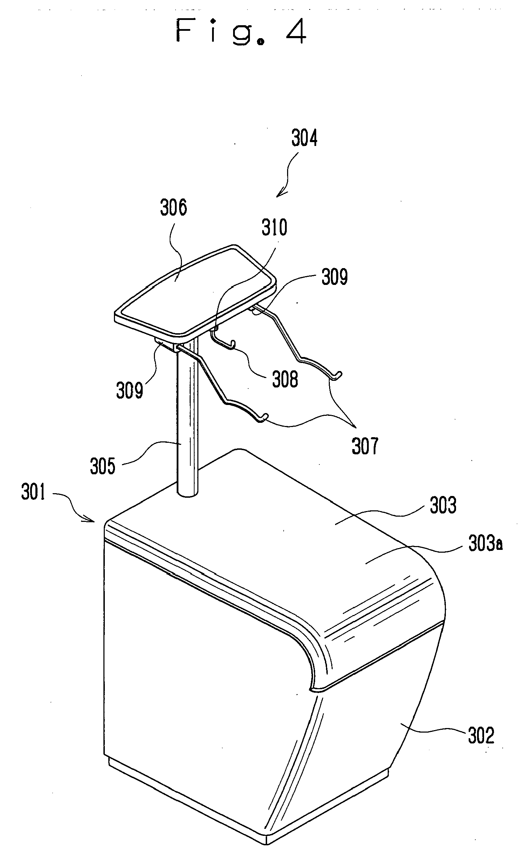

Fig. 4 is a perspective view showing the scale device 301. A scale plate 303 is provided on an upper part of a scale housing 302 and a shopping bag holder 304 is fixed to the scale plate 303 to constitute the scaling device 301. The scale plate 303 has a placing table 303a on its upper surface. The shopping bag holder 304 is fixed to the placing table 303a. Therefore, when seen from the shopping bag holder 304, the scale plate 303 constitutes a base. That is, an arm holder 305 is set up at a back central part of the placing table 303a and a temporary placing table 306 for placing an article is fixed to a top end of the arm holder 305. An upper surface of the temporary placing table 306 is flat to be used for placing an article temporarily after a barcode of the article is read by the barcode scanner 203. Both the placing table 303a and the temporary placing tale 306 play a role as a placing part for placing an article, an article code of which is already read.

Pair of holding arm 307 and a hook 308 are fixed to a back surface of the temporary placing table 306. That is, an arm fixing parts 309 are fixed to both side ends of the back surface of the temporary placing table 306. Fixation of the arm fixing parts 309 is realized by, for example, a screw, a glue, or various fixing methods. And the holding arms 307 are laid in each of the arm fixing parts 309. Also, a hook fixing part 310 is fixed at a central part of the back surface of the temporary placing table 306. Fixation of the hook fixing part 310 is realized by, for example, a screw, glue, or various fixing methods. And the hook 308 is laid in the hook fixing part 310.

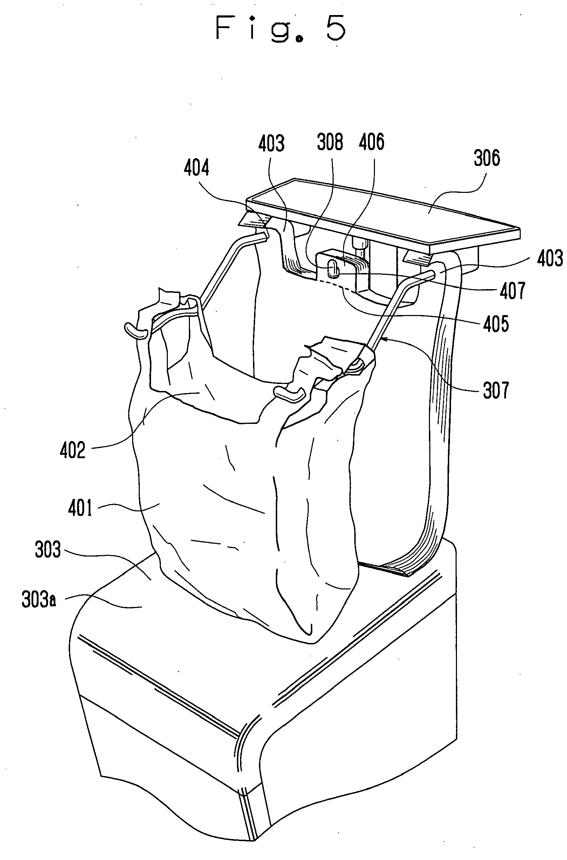

Fig. 5 is a perspective view showing a status that a shopping bag 401 as a storing bag is held to the holding arms 307. The shopping bag 401 has an opening 402 and a pair of handle 403, which is folded at both side of the shopping bag 401. The holding arms 307 pierceably holds the pair of handle 403 of the shopping bag 401 such as a plastic bag and so on, which is provided to a customer in a supermarket. Further, a pair of ear 406 is formed detachably at a perforation 405 between the pair of handle 403, and holes 407 are formed in these ears 406. The hook 308 is pierced through the holes 407 so as to hold the shopping bag 401 with the holding arms 307.

Fig. 6 is a block diagram showing an electric hardware structure of the settlement terminal 201. The settlement terminal 201 has a controller 235 as an information processor in its inside. The controller 235 can be, for example, either a semi-conductor chip structure in which a operation sequence is written, or a microcomputer structure operated by storing an operation program stored in a RAM 254 and so on. Here, a controller 235 of the microcomputer structure will be described.

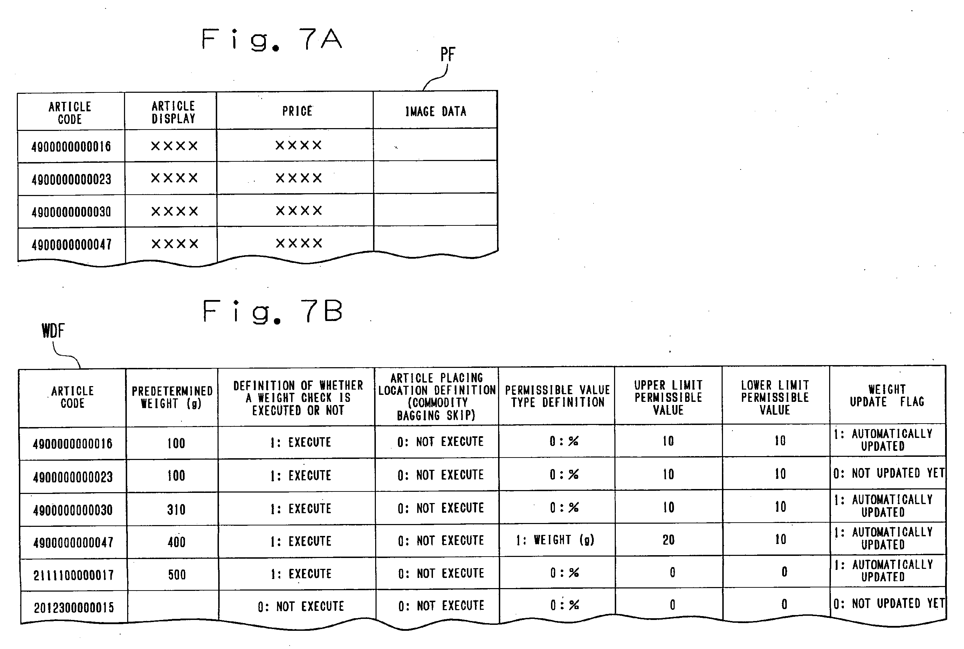

A core part of the controller 253 is a CPU (Central Processing Unit) 255. In the CPU 255, a ROM (Read Only Memory) 256 for fixably storing fixed data, a RAM 254 (Random Access Memory) for rewritably storing changeable data, VRAM (Video RAM) 257 for generating a display image displaying at a LCD (Liquid Crystal Display) 210, and HDD (Hard Disk Drive) 258 are connected via a system bus 259. As an example, the HDD 258 stores an operation program, a various display, frame, a PLU (Price Look-Up) file PF (see Fig. 7 (A)), a category file, a weight data file WDF (see Fig. 7 (b)), an image file, a sales file, and so on (not shown except the PLU file PF and the weight data file WDF) , and these operation programs, the various display frames, and various rule information and so on are transferred to the RAM 254 at an initial operation for use. The various files such that the PLU file PF (see Fig. 7 (A)), the category file, the weight data file WDF (see Fig. 7 (b)), the image file, a sales file, and so on constitute an article data file.

The PLU file PF, which constitutes the article data file, rewritably stores an article display, whether a discount article or not, a discount price, M&M (Mix and Match) information and a price corresponding to an article code which specifies each article. The article display includes text data of a name of the article and the article' s image data specified by the article code.

The category file, which constitutes the article data file, rewritably stores a price, an article display, whether a discount article or not, a discount price, M&M (Mix and Match) information and so on corresponding to a category code of each article. The category code is not stored in the PLU file PF. The article display includes text data of a name of the article and the article's image data specified by the category data.

Fig. 7(A) is an exemplary diagram showing an example of the PLU file PF which constitutes the article data file. The PLU file PF stores an article display, a price and an image data corresponding to an article code. The article display is a text data, which is equivalent to the corresponding article's name. The image data is an image data of the corresponding article. The PLU file PF may include the category file as another example.

Fig. 7(B) is an exemplary diagram showing an example of the weight data file WDF, which constitutes the article data file. The weight data file stores a predetermined weight (g), a definition of whether a weight check is executed or not, an article placing location definition (skip bagging), a permissible type definition, an upper limit permissible value, a lower limit permissible value, and a weight update flag. The weight data file WDF may include the PLU file PF, and the section file as another example.

The predetermined weight (g) stores a predetermined value of a weight of an article specified by the article code.

The definition of whether a weight check is executed or not is, as described above, definition information which stores whether the weight check is executed or not correspondent to each article code. The controller 253 of the self-checkout terminal 101 interprets ┌0┘ as "Do not weight check", and ┌1┘ as "Do weight check" during the definition of whether the weight check is executed or not. As an example of the article, the weight of which is not checked, is an article which is too light or is not appropriate for weighing, or the article which is too heavy and therefore hard to transfer to the placing table 303a of the scale device 301. The definition of whether the weight check is executed or not may be included to the PLU file PF as another example.

The article placing location definition (bagging skip) defines which placing location should be for an article, a barcode of which has been read by the barcode scanner 203. The placing location is the placing table 303a (no weight skip), a temporary placing table 306 (weight skip (weighing)), or a floor (weight skip (weight)). The controller 253 of the self-checkout terminal 101 interprets ┌0┘ as the placing table 303a (no weight skip) , ┌1┘ as the temporary placing table 306 (weight skip (weighing)), and ┌2┘ as the floor (weight skip (weight)) during the definition of whether the weight check is executed or not. As another example, the article placing location definition may be included to the PLU file PF. Further, as another example, characteristic information of the article such as easily cracked, easily broken, easily got out of shape, or heavy is stored in the PLU file PF and the article placing location definition defines the temporary placing table 306 to be the placing location for the article which is easily cracked, easily broken, or easily got out of shape, and defines the floor to be the placing location for the heavy article. Further, as another example, as the placing location for the read article when the weight is heavier than the predetermined weight stored in the weight data file WDF, the floor is defined.

The permissible value type definition is information which defines whether a permissible range with respect to the predetermined weight (g) should be either a rate, or the upper limit value and the lower limit value. That is, at a weight check process, a comparison process of the weights between a real weight weighed by the scale device 301 and the weight stored in the predetermined weight (g) is executed. At that moment, a permissible range with respect to the predetermined weight (g) is defined. The permissible range is obtained from the rate with respect to the weight value stored in the predetermined weight (g) according to the definition stored in the permissible value type definition, or is obtained from the predetermined upper limit value and lower limit value.

The upper limit permissible value and the lower limit permissible value store value information for defining the permissible range with respect to the predetermined weight (g) . When the permissible value type definition takes the rate with respect to the weight value stored in the predetermined weight (g) as the permissible range, a value to be stored in the upper limit value and the lower limit value will be a percentage order values. Also, when the permissible value type definition takes a specific value as the upper limit value and the lower limit value with respect to the weight value stored in the predetermined weight (g), a value to be stored in the upper limit value and the lower limit value will be the specific value itself.

The weight update flag stores whether a weight registration process is executed or not. The controller 253 of the self-checkout terminal 101 interprets ┌0┘ as "not updated yet", ┌1┘ as "automatically updated", ┌2┘ as "manually updated", and ┌3┘ as "individually updated". When not yet updated, a default value is selected. The automatic update is executed through the weight registration process. The manual update is executed by a hand input. The individual update is executed by a hand input after the automatic update.

Now, going back to the explanation of the block diagram showing an electrical hardware structure of the settlement terminal 201 shown in Fig. 6. The barcode scanner 203, the LCD 210, the touch panel 211, the card reader 206, the numeric keys 207, the card reader/writer 252, the receipt printer 251, the watch camera 205, the emission part 218 as the announcement part, an interface 260 which executes data communication with the receiving/dispensing device 221 are connected to the controller 253 via the system bus 259 so as to be controlled by the controller 253. The controller 253 controls each part and executes an article sales data process which includes a search process, the weight check process, an article information registration process and a settlement process.

The search process recognizes an article code specified by a barcode when the barcode affixed to the article is read by the barcode scanner 203, and searches the PLU file PF and the weight data file WDF and acquires a price, a weight and an article display corresponding to the article code.

The weight check process is a process determining whether the weight of the article, which is weighed by the scanner device 301 after the barcode was read, is identical to the weight acquired by the search process. Whether the weight is identical or not is determined by seeing whether the weight of the article, which was obtained based on the weighed weight by the scale device 301, is within a permissible range of the weight (a range between the upper limit value and the lower limit value, for example) acquired by the search process, that is, within a weight range.

The article information registration process executes a temporal registration of transaction information to the RAM 254, which includes the article code specified by the barcode and the price searched by the search process based on the specified article code when the barcode affixed to the article is read by the barcode scanner 203.

The settlement process is a process to calculate a settlement amount based on the price acquired through the search process, and to execute a settlement of the settlement amount. The settlement amount is obtained by calculating necessary sales amount which includes a consumer tax in accordance with a closing operation through the touch panel 211, and is registered temporarily to the RAM 254, or is registered to a sales file. The settlement process enables the calculated settlement amount to be settled by cash, a magnetic card such as a credit card, electronic money or a non-contacting IC card, which stores an identification number identifying a bank account. A cash treatment is executed at the receiving/dispensing device 221 provided at the base housing 202a, while a magnetic card treatment is executed through the card reading/writing part 206.

In the embodiment of the present invention, a concept of an article sales data processing is used in a broad sense which includes the search process, the weight check process, the article information registration process, the settlement process and so on. Therefore, to assist the article sales data processing which includes the broad sense of meaning, the controller 253 of the settlement terminal 201 provides a customer with a display of operation method for their convenience.

The communication interface 261 is connected via the system bus 259 to the controller 253. The controller 253 is connected to the communication network 41 so as to realize data communication between the attendant terminal 510, the store controller 31, and the self-checkout terminal 101.

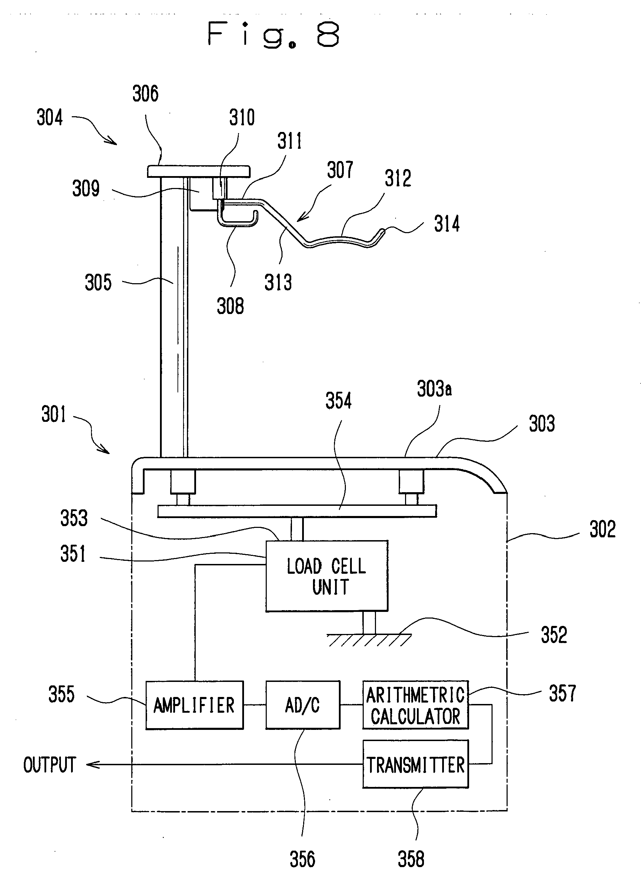

Fig. 8 is an exemplary diagram showing an electrical hardware structure of the scale device 301. The scale device 301 has a load cell unit 351. One end of the load cell (a structure and a shape is not shown) is fixed to a base 352, and a load receiving part 353 is provided at the other end. A scale frame 354 is formed in X-shape when seen from plane view, and places scale plates 303 at its four corners. An output signal of the load cell unit 351 is amplified at an amplifier 355 and converted into a digital signal at an analogue/digital converter (AD/C) 356, and analyzed at an arithmetic calculator 357. At the arithmetic calculator 357, a weight analysis is performed based on the output signal of the load cell unit 351. The arithmetic calculator 357 may be a semi-conductor chip structure in which an operation sequence is written, or a microcomputer structure, which operates by operation programs stored in a RAM or the like. The arithmetic calculator 357 transmits weight data to the transmitter 358, which is a result of the analysis, and outputs it to the settlement terminal 201 through the transmitter 358. The transmission of the weight data to the settlement terminal 201 is executed periodically at a predetermined cycle for one example, and for another example, the transmission is executed periodically at a predetermined cycle after a user assigns a start of a self-checkout process. It is desirable that the cycle of the examples is short such as few microseconds to few hundred microseconds.

In the embodiment as explained above, the self-checkout terminal 101 enables a self-checkout. At this point, the controller 253 of the settlement terminal 201 and the arithmetic calculator 357 of the scale device 301 executes various arithmetic calculation processes, a drive control process and so on, so as to assist the self-checkout process. That is to say, the settlement terminal 201 displays various user assistance displays and executes the search process, the weight check process, and the article sales data process as described above. The scale device 301 transmits and outputs the weighed value from the transmitter 358 to the settlement terminal 201 in order to assist the weight check process at the settlement terminal 201. In the following, a flow of the self-checkout process will be explained with reference to a flowchart showing a flow of the processes, various display examples and display transition examples, and so on.

### 2. SELF-CHECKOUT PROCESS

### (1) BASIC ROUTINE OF THE SELF-CHECKOUT PROCESS

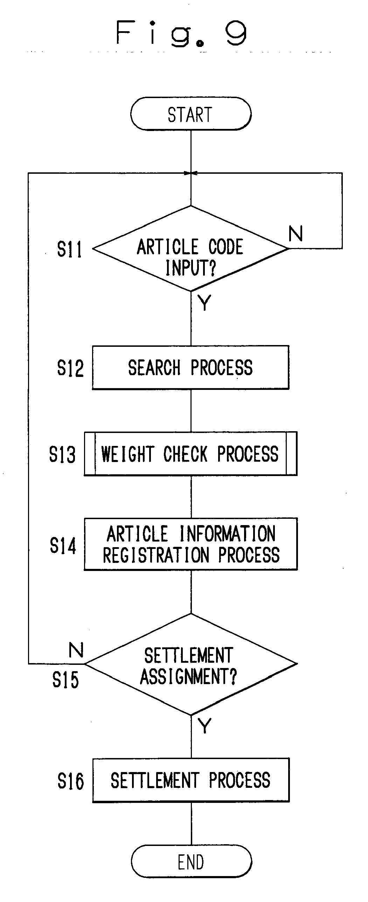

Fig. 9 is a flowchart showing a flow of the self-checkout process at the self-checkout terminal 101. The controller 253 of the self-checkout terminal 101 stands by for a decision whether the article code is input or not (step S11). An input of the article code is performed by the barcode scanner 203 or an input operation through the touch panel 211 in accordance with a display of the LCD 210.

When the controller 253 of the self-checkout terminal 101 determines there is an input of the article code (Y of step S11), the search process is executed (step S12). As a result, as explained above, the price, the weight and the article display correspondent to the code input article is acquired.

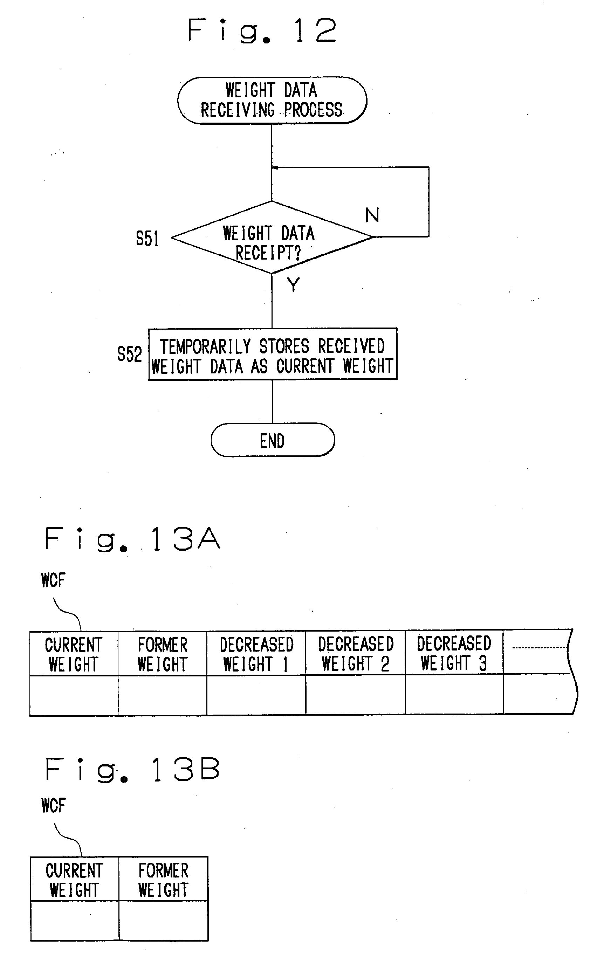

Following the search process, the controller 253 of the self-checkout terminal 101 executes the weight check process (step S12). The weight check process will be described with reference to Figs. 12 to 19 later.

Followed by the weight check process, the controller 253 of the self-checkout terminal 101 executes the article information registration process (step S14) . That is, when the weight check process is gone through, transaction information such as the article code, the price and so on is temporarily registered to the RAM 254.

Followed by the article information registration process, the controller 253 of the self-checkout terminal 101 determines whether a settlement is assigned or not (step S15). The settlement assignment is executed by an input operation through the touch panel 211 in accordance with the display of the LCD 210. Then, if the controller 253 of the self-checkout terminal 101 determines there is a settlement assignment (Y of step S15), the controller 253 executes the settlement process as described above.

### (2) DISPLAY TRANSISION AT THE SELF-CHECKOUT PROCESS

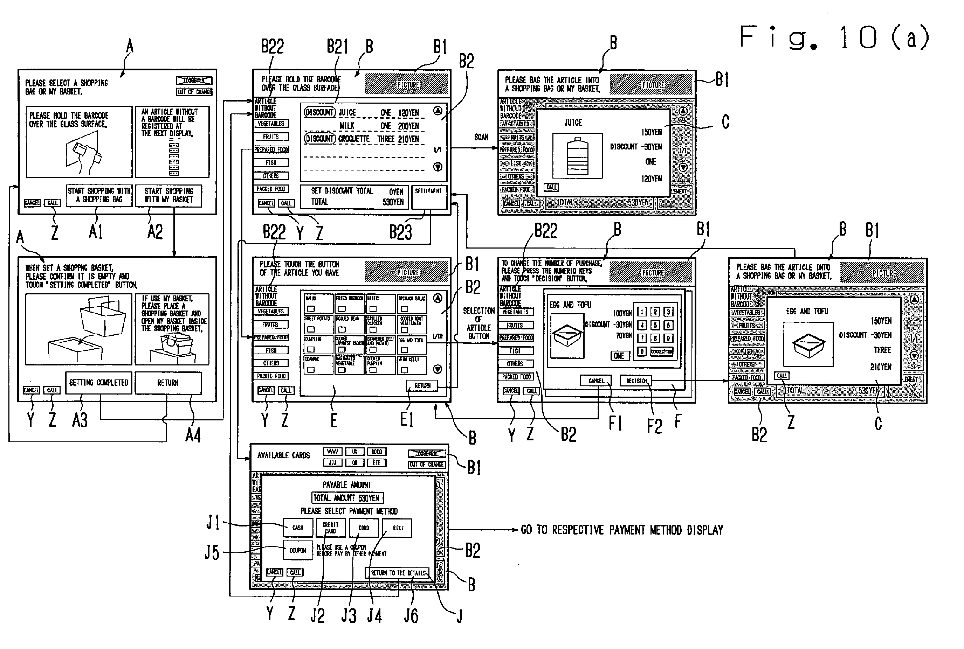

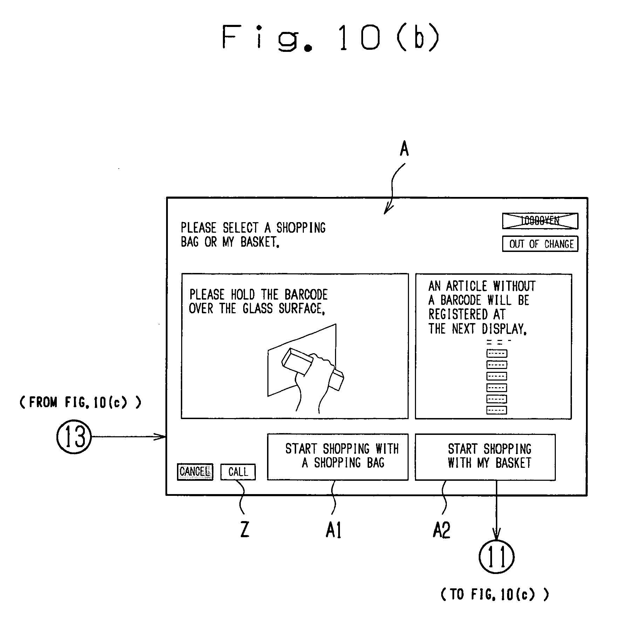

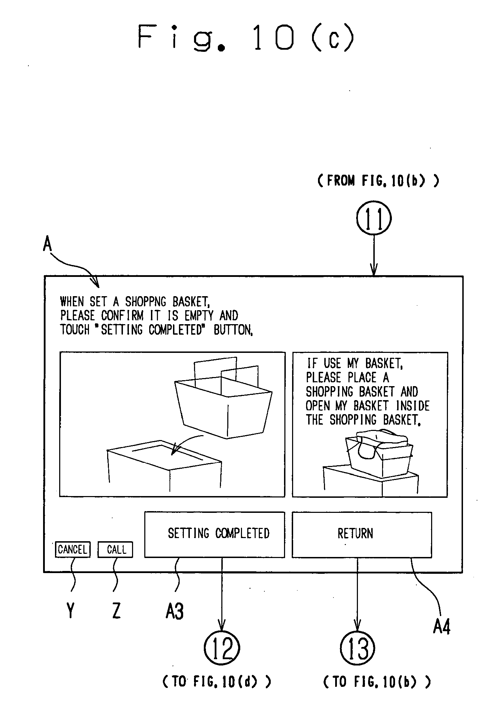

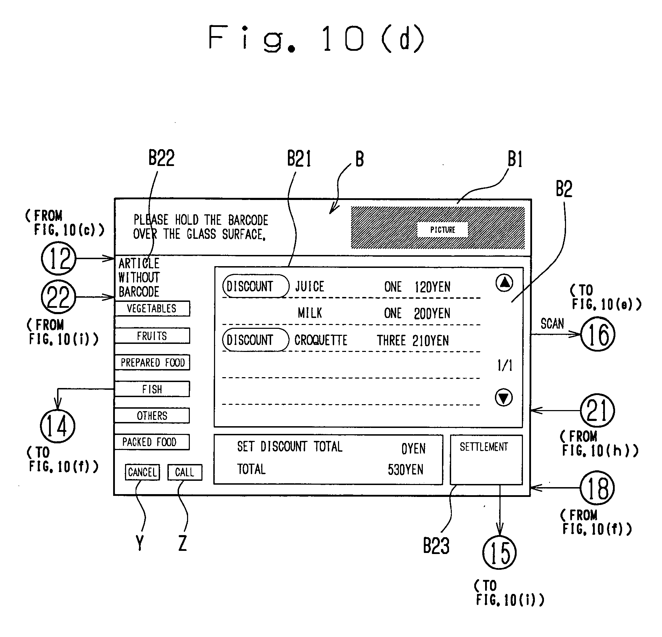

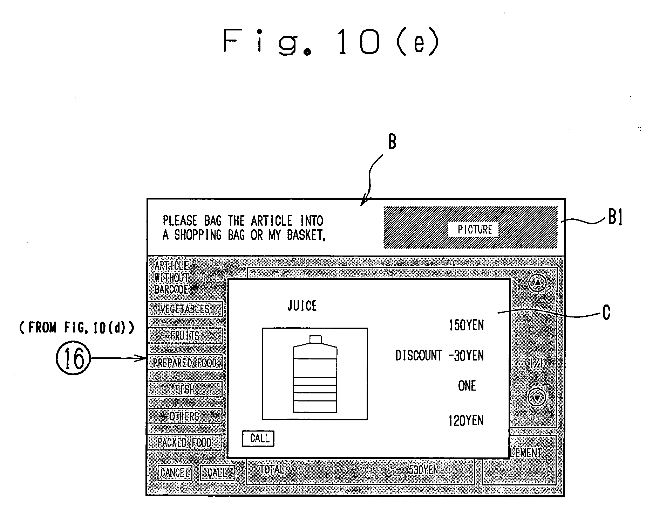

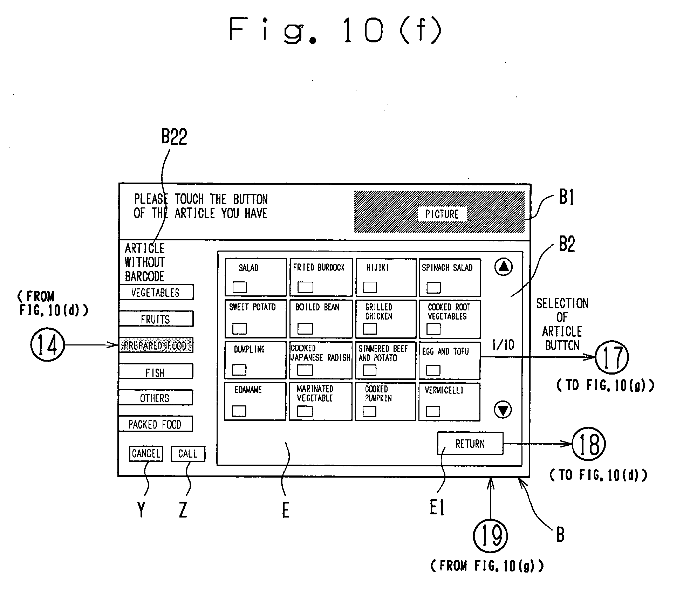

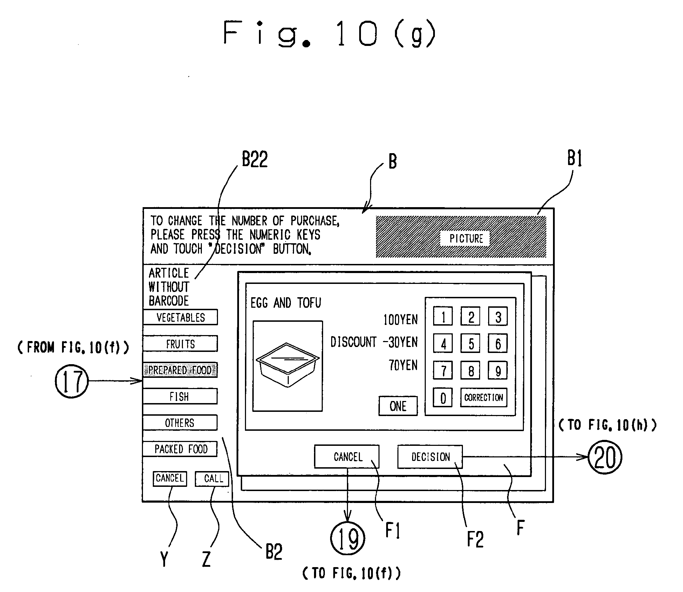

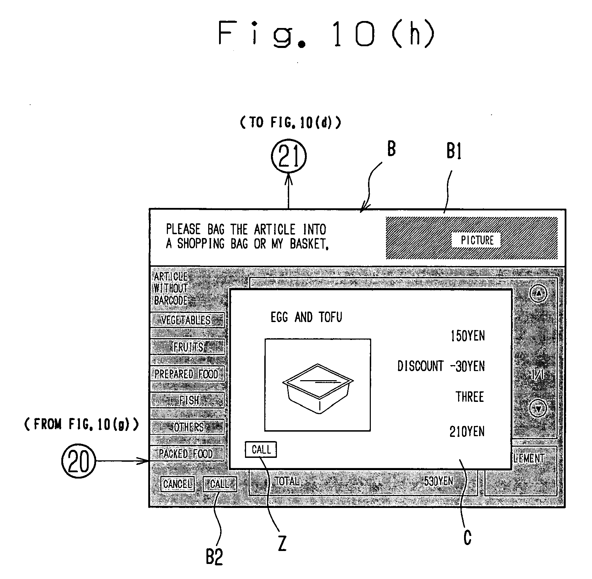

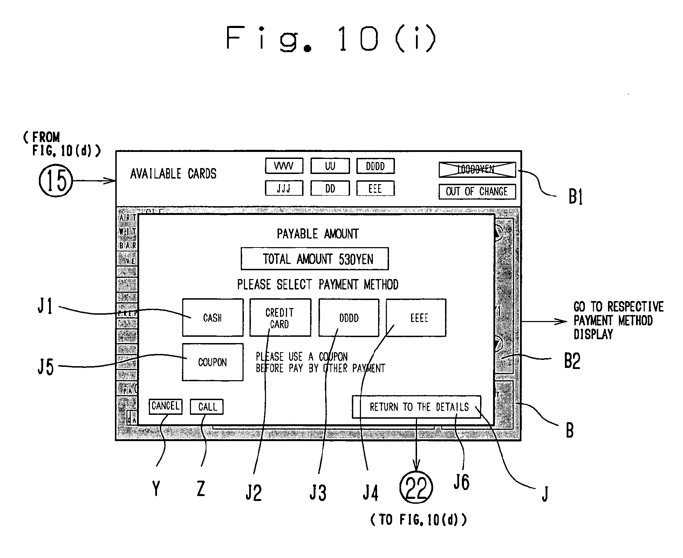

Fig. 10 is an exemplary diagram showing a display transition at the self-checkout process of the self-checkout terminal 101. A customer brings a basket, in which an article to be purchased, to the self-checkout terminal 101, and put the basket on the article placing table 102 of the self-checkout terminal 101.

At this point, the controller 253 of the settlement terminal 101 generates an initial guidance display A as shown in Fig. 10 (the first in rows and the first in columns from left) and display it on the LCD 210. The initial guidance display A guides the customer how to treat the article. Treatment methods guided here are two. One is an article code input by using the barcode scanner 203, and the other is an input assignment through the touch panel 211. As for guidance for the former method, an explanation that "Please hold the barcode over the glass surface" is guided with a picture depicting the explained status. As for guidance for the latter method, an explanation that "An article without a barcode will be registered at the next display" is guided with a picture depicting the next display.

At this point, the controller 253 outputs information indicating its stand-by status as an operation status information showing whether it is in stand-by status or in scanning operation status, to the assigned attendant terminal 501.

The initial guidance display A enables a selection of either using a shopping bag or my basket by providing two selection buttons A1 and A2. Here, my basket means that the basket is owned by a customer. When the selection button A1 is touched and assigned, a self-checkout process with a shopping bag 401 is started. Whilst, the selection button A2 is touched and assigned through the touch panel 211, a self-checkout process with my basket is started.

At this point, the controller 253 outputs information indicating its operation status as an operation status information showing whether it is in stand-by status or in scanning operation status, to the assigned attendant terminal 501.

Fig. 10 shows an example of starting the self-checkout process with my basket when the selection button A2 is touched and assigned through the touch panel 211 (the second in rows and the first in columns from left in Fig. 10). The difference between the process of the shopping bag 401 and the process of my basket is a zero point setting. When the process of my basket is executed, the controller 253 generates and displays an image for guiding a customer that a shop's basket should be placed on the placing table 303a of the scale device 301 and my basket is opened inside the shop's basket. And, a setting completion button A3 and a back button A4 are displayed in the initial guidance display A after my basket was selected (the second in rows and the first in columns from left in Fig. 10). When the setting completion button A3 is touched and assigned through the touch panel 211, the controller 253 communicates the scale device 301 that the zero point setting needs to be executed. When the back button A4 is touched and assigned through the touch panel 211, the display goes back to the initial guidance display A (the first in rows and the first in columns from left in Fig. 10).

A cancellation button Y and a calling button Z are displayed at a lower left part of the initial guidance display A (the second in rows and the first in columns from left in Fig. 10). The cancellation button Y is a button for canceling a process, and the calling button Z is a button for calling a shop assistant (an attendant). The controller 253 generates and displays the cancellation button Y and the calling button Z properly on each display which transits according to a series of flow of the self-checkout process.

When the selection button A3 is touched and assigned through the touch panel 211 at the initial guidance display (the second in rows and the first in columns from left in Fig. 10, for example) after the selection button A1 or A2 was selected and assigned through the touch panel 211 (the first in rows and the first in columns from left in Fig. 10), the controller 253 generates a basic display B and display it on the LCD 210 (the first in rows and the second in columns from left in Fig. 10). The basic display B constitutes a guidance display area B1 and a user area B2. The guidance display area B1 is arranged at an upper position, and the user area B2 is arranged at a lower position. The guidance display area B1 displays various guidance which is necessary for a self-checkout. The user area B2 displays various operation buttons and transaction information which is necessary for a self-checkout.

An explanation that "Please hold the barcode of the article over the glass surface" with a picture depicting the explained status on the guidance display area B1 at the first basic display B (the first in rows and the second in columns from left in Fig. 10), which stands by for reading the barcode of the article.

An article assignment button B22 for assigning an article without barcode is display as one of various operation buttons at the user area B2 in the first basic display B (the first in rows and the second in columns from left in Fig. 10) which stands by for reading of the barcode affixed to the article, and transaction information B21 including a name of the article to be purchased, a quantity, a price, and a total amount of the articles to be purchased are displayed. The display example of Fig. 10 shows a status in which a bottle of juice, a pack of milk, and three croquettes have been already registered. When the number of purchasing article increases, a scrolling display is available by touching and assigning a scrolling button through the touch panel 211 in the transaction information B21. Also, there are circle marks displayed at right sides of the juice and the croquettes. These circles show these articles are discounted. To show whether an article is discounted or not is possible to let the PLU file PF to have discount information.

The customer holds the article in front of the barcode scanner 203 so that the barcode is read according to the guidance display which is displayed in the guidance display area B1 of the first basic display B (the second in rows and the second in columns from left in Fig. 10).

At this point, the controller 253 reduces brightness of the user area B2 of the basic display B displayed on the LCD 210, generates a reading confirmation display C, and displays the generated reading confirmation display C to lap over the user area B2 (the first in rows and the third in columns from left in Fig. 10). The reading confirmation display C includes the transaction information such as a price, a discount price, a quantity of articles, and a total amount of the article, the barcode of which has been read and searched from the PLU file PF. Also, the reading confirmation display C includes letters based on text data of a name of the article cited from the article display stored in the PLU file PF, and a picture based on the image data of the article. The reading confirmation display C may adopt a common pop up display technique for a display, and also may adopt a technique using a display frame to display the reading confirmation display C to lap over the basic display B. That is to say, it is enough for the reading confirmation display C to be displayed lapping over the basic display B. Therefore, there is no limitation for the display technique to be adopted.

To be important, the reading confirmation display C laps over the user area B 2 of the basic display B only, and does not lap over the guidance display area B1. Therefore, the guidance display can be displayed on the guidance display area B1 continuously. When the barcode affixed to the article is read by the barcode scanner 203, at the example shown in Fig. 10, the display is transited from the first basic display B1 of "Please hold the barcode of the article over the glass surface" (the first in rows and the second in columns from left in Fig. 10) to the display of "Bag the article into a shopping bag or my basket" (the first in rows and the third in columns from left in Fig .10) at the guidance display area B1. The controller 253 transits not only the explanation, but also the picture for assisting the work to bag the article into a shopping bag or my basket. Since the reading confirmation display c does not lap over the guidance display area B1, the customer can confirm the guidance display and the display transition on the guidance display area B1 easily.

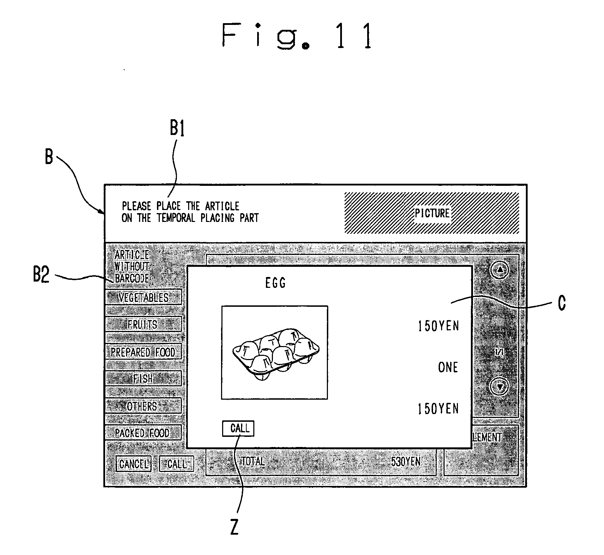

Fig. 11 is an exemplary diagram showing the basic display B and the reading confirmation display C with respect to the article to be placed on the temporary placing table 306. As described above, the settlement terminal 201 has the article placing location definition. Thus, when the barcode of the article is read by the barcode scanner 203, and the temporary placing table 306 is defined as the article placing location definition at the first basic display B (the first in rows and the second in columns from left in Fig. 10), the controller 253 generates and displays the explanation that "Place the article on the temporary placing table." with a picture for assisting the explanation in the guidance display area B1 on the LCD 210.

Now, going back to the explanation with reference to Fig. 10. The controller 253 stands by for the weight check process after the barcode affixed to the article is read by the barcode scanner 203. Therefore, a guidance of the explanation that "Bag the article into a shopping bag or my basket" with the picture for assisting the explanation is displayed (the first in rows and the third in columns from left in Fig. 10). Alternatively, as shown in Fig. 11, when the temporary placing table 306 is defined as the article placing location definition, the guidance of the explanation that "Place the article on the temporary placing table" with the picture for assisting the explanation is displayed on the guidance display area B1. Then, the customer bags the article, the barcode of which has been read by the barcode scanner 203, into the shopping bag 401 or my basket, or places the article on the temporary placing table 306 according to the guidance. Consequently, the article, which was bagged in the shopping bag 401 or was placed on the temporary placing table 306, loads onto the scale plate 303 of the scale device 301, thereby the load is weighed by the load cell unit 351. The weighed result by the load cell unit 351 is output to the settlement terminal 201 through the transmitter 358 as described above. The settlement terminal 201 receives the weighed result by the load cell unit 351 and executes the weight check process. As described above, the weight check process is a process to see the weight of the article, the barcode of which was read, is weighed by the scale device 301, has identity to the weight acquired from the weight data file WDF by the search process. To see whether both have identity or not, it is determined that the weight obtained based on the weighed weight by the scale device 301 is within the weight permission range (the range between the upper limit value and the lower limit value, for example) acquired by the search process, that is, within the weight range.

When it is determined that both weights do not have identity as a result of the weight check process, there would have been a wrong operation or a wrongdoing. Thus, in this case, the controller 253 stops the progress of the article sales data processing and changes the emission light of the emission part 218 provided at the tip of the display pole 217 from blue to read so as to announce to the shop assistant (the attendant) that there was an operation error or a wrongdoing. As a result of stop of the article sales data processing, the display image of the LCD 210 remains in the reading confirmation display C so as to inform the customer that the process does not proceed.

### (3) WEIGHT CHECK PROCESS

### (i) FIRST EXAMPLE

Here, a flow of the weight check process will be described with reference to Figs. 12 to 17.

Fig. 12 is a flowchart showing a flow of a weight data receiving process from the scale device 301, which is included to the weight check process. The scale device 301 transmits the weighed result by the load cell unit 351 as the weight data to the self-checkout terminal 101. Here, the controller 253 of the self-checkout terminal 101 stands by for receiving the weight data when a start of the self-checkout process is touched and assigned by the selection button A1 in the first initial guidance display A (the first in rows and the first in columns from left in Fig. 10) through the touch panel 211 (step S51). Then, the controller 253 determines that there is a receipt of the weight data (Y of step S51), the received weight data is temporarily stored in the RAM 254 as a current weight (step S52).

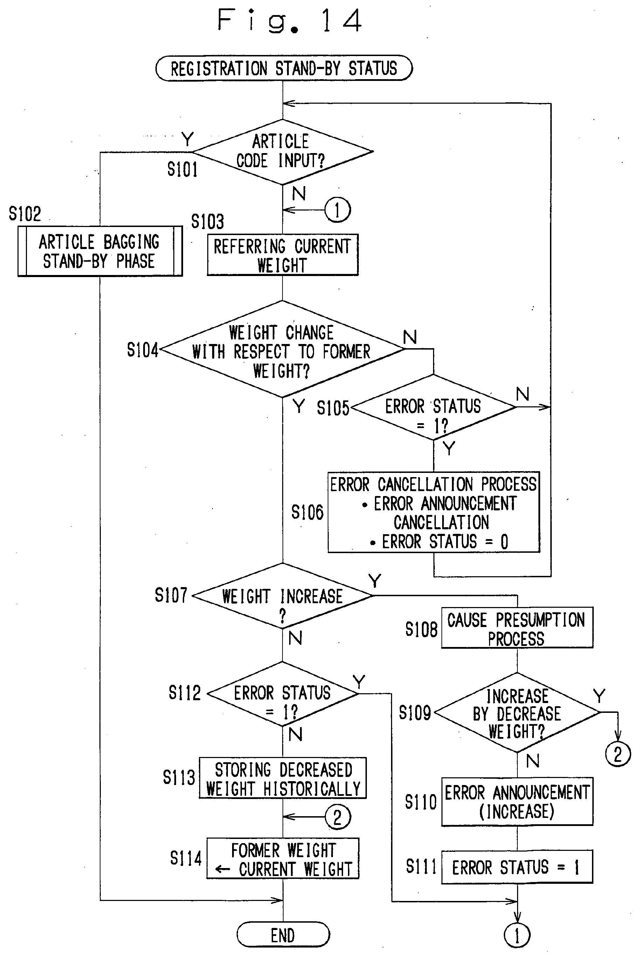

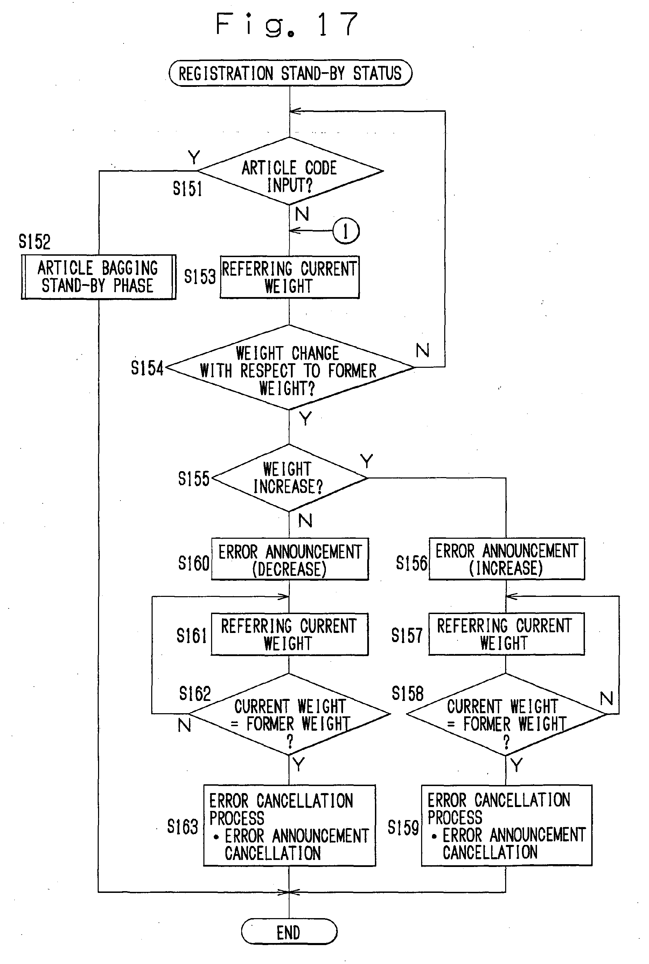

Fig. 13 is an exemplary diagram showing an example of the weight check file. When a start of the self-checkout process is assigned, the controller 253 of the self-checkout terminal 101 generates the weight check file WCF as shown in Fig. 13 in the RAM 254. The weight check file WCF as shown in Fig. 13(A) is used during the weight check process shown in Figs. 14 to 16 and stores the current weight temporarily which is stored temporarily in step S52 of Fig. 12, a former weight, and a weight history of the weight if there is a decrease in the weight (decrease weight 1, decrease weight 2, decrease weight 3, ···). Also, the weight check file WCF shown in Fig. 13 (B) is used during the weight check process shown in Figs. 17 to 19 and stores the current weight temporarily which is stored temporarily in step S52 in Fig. 12, and a former weight.

As described above, the transmission of the weight data from the scale device 301 to the settlement terminal 201 is executed periodically at the short cycle such as few microseconds to few hundred microseconds, for example. At the receiving process of the step S51 in the flowchart shown in Fig. 12, whenever there is the weight data transmission from the scale device 301 to the settlement terminal 201, it is always determined that there is a data receipt. Therefore, the controller 253 of the settlement terminal 201 updates and stores the weight data transmitted from the scale device 301 at the short cycle such as few microseconds to few hundred microseconds periodically to the weight check file WCF shown in Fig. 13 as the current weight.

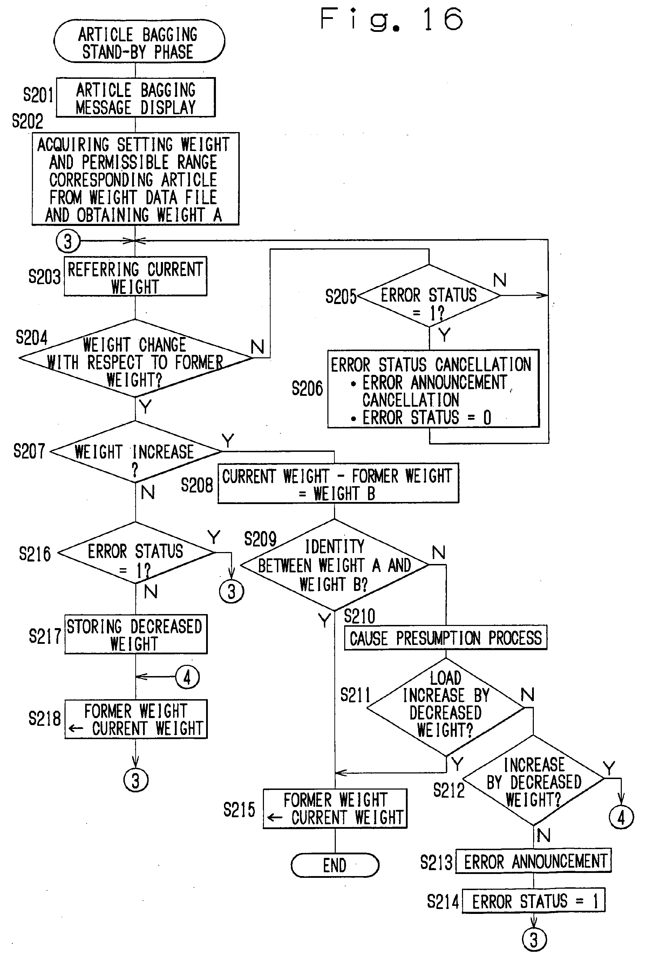

Fig. 14 is a flowchart showing an example of a flow of the weight check process . The controller 253 of the self-checkout terminal 101 stands by for registering article information when a start of the self-checkout process is assigned. In the weight check process, the status described above stands by for determining whether there is an input or not (step S101). When it is determined that there is an input of the article code (Y of step S101), the flow goes to an article bagging stand-by phase shown in Fig. 16 (step S102) . The article bagging stand-by phase ends when the article, the article code of which has been input, is placed on the placing part (the placing table 303a or the temporary placing table 306) of the scale device 301 and goes through the weight check (steps S209 and S215 in Fig. 16). Meanwhile, when it is determined to stand by for an input of the article code (N of step S101), the current weight stored in the weight check file WCF shown in Fig. 13 (A) is referred (step S13) and, similarly, it is determined that there is a weight change with respect to the former weight stored in the weight check file WCF shown in Fig. 13 (A) (step S104) . It is determined to stand by for an input of the article code (N of step 101) either when the article code has not been input yet after the start of the self-checkout process was assigned, or when the article bagging phase for a former article has been safely completed.

Here, the former weight will be explained. The former weight is set for 0 (g) as a default value. In the article bagging stand-by phase, when the weight check process is passed with respect to an article, the article code of which has been input, placed on the placing part (the placing table 303a or the temporary placing table 306) of the scale device 301, the former weight with respect to current weight in the weight check file WCF shown in Fig. 13(A). As can been seen from the explanation above, the former weight is set for 0 (g) when there is no article code being input in one transaction. When the article code is input, the former weight means a weighed value by the scale device 301 of all the articles, the article codes of which have been input, being placed on the placing part (the placing table 303a or the temporary placing table 306) in principle. Therefore, if it is operated in a normal sense, there must be no determination that there is a weight change with respect to the former weight in step S104. Thus, when it is determined that there is no weight change with respect to the former weight (N of step S104), the process goes back to the determination whether there is an article code input or not in step S101 after going through the processes in steps S105 and S106 as described later.

In contrast, when an article, the article code of which has not been input yet, is placed on the placing part (the placing table 303a or the temporary placing table 306) of the scale device 301, the current weight exceeds the former weight or if an article, the article information of which has been registered and placed on the placing part, is removed from the placing part (the placing table 303a or the temporary placing table 306) of the scale device 301, the current weight falls below the former weight. Thus, in step S107 after it is determined that there is a weight change with respect to the former weight (Y of step S104), it is determined whether there is a weight increase, that is to say, it is determined whether the current weight increases compared to the former weight.

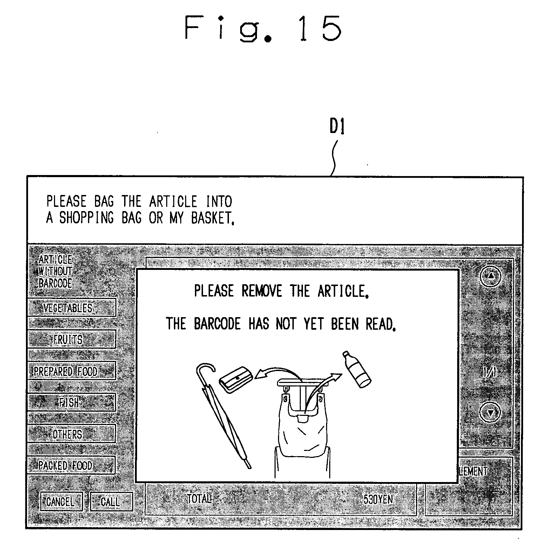

When the controller 253 of the self-checkout terminal 101 determines that the current weight increased compared to the former weight (Y of step S107), the controller 253 executes an error announcement after going through steps S108 and S109 described later (step S110). That is, in the situation described above, there must be a wrong operation such that the article, the article code of which has not been input, is placed on the placing part (the placing table 303a or the temporary placing table 306) of the scale device 301, or a wrongdoing, the controller 253 changes the emission color of the emission part 218 provided at the tip of the display pole 217 from blue to red so as to announce the shop assistant (the attendant) that there was a wrong operation or a wrongdoing. Additionally, the controller 253 displays a weight error display D1 on the LCD 210 of the self-checkout terminal 101 (Fig. 15). Then, the controller 253 sets an error status = 1 to the RAM 254 (step S111), and goes back to the current weight referring process of step S103.

Fig. 15 is an exemplary diagram showing an example of the weight error display D1 when the article, the barcode of which has not yet been read, is placed on the placing part (the placing table 303a or the temporary placing table 306) of the scale device 301 as a result of the weight check process. When the controller 253 determines that the current weight increased compared to the former weight (Y of step S107), the controller 253 reduces brightness of the basic display B as a whole, generates the weight error display D1 as shown in Fig. 15, and displays the weight error display D1 to lap over the basic display B. The weight error display D1 displays an explanation that "Please remove the article. The barcode has not yet been read." with a picture for assisting the explanation.

Then, the controller 253 of the self-checkout terminal 101 executes the current weight referring process (step S103). At this point, if the controller 253 does not determine that there is no weight change with respect to the former weight at step S104 (N of step S104), the article, which was placed on the placing part (the placing table 303a or the temporary placing table 306) by a wrong operation or a wrongdoing, would have been returned. Therefore, the progress goes through a determination routine that the error status = 1 of the step S105 (Y of step S105), the error cancellation process is executed at the step S106. An error cancellation process is executed by a cancellation of the error announcement and a setting of error status = 1. That is, the controller 253 of the self-checkout terminal 101 returns the brightness of the user area B2 of the basic display B to a former brightness and removes the weight error display D1. Consequently, the display of the LCD 210 is returned to the basic display B (the first in rows and the second in columns from left in Fig. 10).

When the controller 253 of the self-checkout terminal 101 determines that a current weight decreased compared to the former weight (N of step S107), the decrease weight is recorded to the weight check file WCF shown in Fig. 13 (A) on condition that the error status is not "1", and updates the former weight of the weight check file WCF to the current weight (step S114). That is, in this case, the article, which is placed on the placing part (the placing table 303a or the temporarily placing table 306) after the article information registration, must have been already removed. Such situation might be expected to happen for the customer who brings his/her child. That is, there would be a situation that the child takes away a snack, for example, which was once placed on the placing part (the placing table 303a or the temporal placing table 305) of the scale device 301 during the parents operation of the self-checkout terminal 101. Therefore, when such the situation happens, since the article information itself has already been registered, this example allows the situation not to be taken as an error. In other words, as described above, the former weight of the weight check file WCF with respect to the current weight (step S114). In brief, whenever a weight decrease is determined (N of step S107) before going to the article bagging stand-by phase (step S102), a history is recorded one after another in the weight check file WCF shown in Fig. 13(A) such that a decreased weight 1, a decreased weight 2, a decreased weight 3, ··· and so on, for the decreased weight.

Here, when a weight increase is determined at the step S107 (Y of step S107), there must be the article, the article code of which has not yet been input, to be placed on the placing part (the placing table 303a or the temporary placing table 306) of the scale device 301. If a weight decrease is determined thereafter (N of step S107), it is not always the case that the article, which was once placed on the placing part (the placing table 303a or the temporary placing table 306) of the scale device 301 with wrong operation or wrongdoing, has been removed. For example, a very expensive article is wrongly bagged into the shopping bag 401, then, an inexpensive article might be removed from the shopping bag 401 so that the weight decrease might have been determined at the step S107. In this case, if the former weight of the weight check file WCF with respect to the current weight, a wrong operation or a wrongdoing will be over looked. Therefore, before the former weight of the weight check file is updated to the current status (step S114), it is determined whether the error status = 1 or not at the step S112, and if the error status =1 (Y of step S112), the process returns to the current weight referring process of the step S103 again. In brief, when the article is placed on the placing part (the placing table 303a or the temporary placing table 306) of the scale device 301, the article code of which has not yet been input, the former weight of the weight check file WCF will be updated to the current weight (step S114) after it is firmly confirmed that the article is removed (step S106 and N of step S112).

Also, there would be a possibility that the article is returned to the placing part (the placing table 303a or the temporary placing table 306) of the scale device 301 after the article, which had been registered and placed on the placing part, and then removed. For an example, the child removes a snack or the like from the shopping bag 401, and the parents realize it and return the snack to the shopping bag 401 again. At this point, since the process of the step S114 updates the former weight of the weight check file WCF to a decreased current weight, it is determined that there is a weight change with respect to the former weight (Y of step S104), it is then determined that there is a weight increase (Y of step S107), and the error announcement is executed (step S110) if the process goes immediately to the process of step S110 after the determination of Y of step S107. However, it is inappropriate for a practical operation. Thus, in this case, a cause presumption process is executed (step S108). This process determines whether the increase is correspondent with the decrease weight at the step S107, or not (step S109). That is to say, at the cause presumption process at the step S108, it is determined that the increased weight accords with one or more weight value acquired from the decreased weight history, which is stored in the weight check file WCF (the first determination process). That is, it is determined that the increased weight accords with one of combinations of the decreased weights recorded in the history of the weight check file WCF. As a result of the determination, it is presumed that the article, which is the cause of decrease in the former weight and had removed from the placing part (the placing table 303a or the temporary placing table 306) of the scale device 301, is placed on the placing part again. The combinations of the decreased weight means all combinations of the decreased weight values stored in the weight check file WCF. For instance, when the decreased weight 1 is 15g, the decreased weight 2 is 20g, the decreased weight 3 is 30g, the decreased weights after the decreased weight 4 is null, the combinations of the decreased weights are the following seven combinations;
15 (g)
20(g)
30 (g)
15+20=35(g)
15+30=45(g)
20+30=50(g)
15+20+30=65(g)

Therefore, the cause presumption process of step S108 refers a value of the decreased weights stored in the weight check file WCF, analyzes the above combinations to obtain all the decreased weight values, and executes the process that determines whether the increased weight value determined at the step S107 accords with any of the decreased weight values. If the increased weight value accords with one of the decreased values, it is presumed that the article, which is the cause of the decrease in the former weight and was removed from the placing part of the scale device 301, is placed on the placing part again. Here, as a result of the cause presumption process, when it is presumed that the article, which is the cause of the decrease in the former weight and had removed from the placing part of the scale device 301, is placed on the placing part again (Y of step S109), the process goes to a process of the step S114 and updates the former weight of the weight check file WCF shown in Fig. 13(A) to the current weight.

Fig. 16 is a flowchart showing an example of a flow of the weight check file at the article bagging stand-by phase. Firstly, when the controller 253 of the self-checkout terminal 101 determines that there isan input of the article code at the step S101 of Fig. 14 (Y of step S101), the process goes to the article bagging stand-by phase (step S102). The article bagging stand-by phase as shown in Fig. 16 displays a bagging message on the LCD 210 (step S210). The bagging message is instructed as guidance that "Please bag the article into a shopping bag or my basket" in the guidance display area B1 of Fig. 10, and guidance that "Please place the article on the temporal placing table" in the guidance display area B1 in Fig. 11.

In the following step S202, the controller 253 of the self-checkout terminal 101 searches the weight data file WDF which constitutes the article data file, acquires a predetermined weight and its permissible range (the upper limit permissible value and the lower limit permissible value) of corresponding article defined as the predetermined weight, and obtains a weight A. The weight A is within the upper limit permissible value and the lowerlimit permissible value with respect to the predetermined weight stored in the weight data file WDF shown in Fig. 7 respectively. For instance, when the predetermined weight is 310 (g) and the upper limit permissible value and the lower limit permissible value are 10(g) respectively, the weight A is to be 300 to 320(g).

Then, the current weight, which are temporarily stored as the current weight in the weight check file WCF shown in Fig. 13(A) at the step S52, is referred (step S203), and the weight change with respect to the former weight, which is temporarily stored in the weight check file WCF, is determined (step S204).

At this point, the article, the article code of which has been input, must be placed on the placing part (the placing table 303a and the temporary placing table 306) of the self-checkout terminal 101 at the article bagging stand-by phase. Meanwhile, the process returns to the current weight referring process of the step S203 followed by the processes of the steps S205 and S206 as described later until when the article is placed on the placing part (the placing table 303a and the temporary placing table 306). Then, when the article is placed on the placing part (the placing table 303a and the temporary placing table 306), it is determined that there is a weight change of the current weight with respect to the former weight (Y of step S204), and it is then determined that the weight change is an increase of the current weight with respect to the former weight (Y of step S204). Then, in this case, in order to obtain the increase of the current weight as a weight B, which is a weight of the articles placed on the placing part (the placing table 303a and the temporary placing table 306), the weight obtained by the former weight being subtracted from the current weight is referred as the weight B (step S208). That is, a calculation that (the current weight) - (the former weight) = the weight B is executed. Then (the current weight) - (the former weight) is referred as the weight B (step S208), it is determined that an identity between the weight B and the weight A which is within the upper limit permissible value and the lower limit permissible value with respect to the predetermined weight acquired at the step S202 (step S209). The identity determination between the weight A and the weight B is executed by seeing the weight B is included within the weight A's range. As a result, when the controller 253 of the self-checkout terminal 101 determines the identity between the weight A and the weight B (Y of step S209), the controller 253 updates the former weight as the current weight (step S215) in the weight check file WCF shown in Fig. 13(A) and the process is over.

In the meantime, when the article, the article code of which has not been input yet, is placed on the placing part (the placing table 303a and the temporary placing table 306) of the scale device 301, it will not be determined that there is an identity between the weight A and the weight B unless there is an identity between the article and an article, an article code of which is input (N of step S209). Therefore, in this case, the controller 253 of the self-checkout terminal 101 executes the error announcement as described above followed by the processes of steps S210 to S212 as described later (step S213). That is to say, in this case, the article, the article code of which has not been input, is placed on the placing part (the placing table 303a and the temporary placing table 306) of the scale device 301 with a wrong operation or a wrongdoing, the controller 253 changes the emission color of the emission part provided at the tip part of the display pole 217 from blue to red so as to announce the shop assistant (the attendant) that there was a wrong operation or a wrongdoing. Additionally, the weight error display D1 is displayed on the LCD 210 of the self-checkout terminal 101 (step S214). Then, the error status = 1 is set to the RAM 254 (step S214) and the process returns to the current weight referring process of step S203.

When the controller 253 of the self-checkout terminal 101 determines there is no weight change with respect to the former weight at the step S204 (N of step S204), the article placed on the placing part (the placing table 303a and the temporary placing table 306) of the scale device 301 with a wrong operation or a wrongdoing should have been removed. Thus, the error cancellation process at the step S206 is executed followed by the determination routine that the error status = 1 at the step S205 (Y of step S205) . The error cancellation process is executed with a cancellation of the error announcement and a setting that the error status = 0. That is, the controller 253 of the self-checkout terminal 101 returns the brightness of the user area B2 in the basis display B and cancels the weight error display D1. Thereby, the display on the LCD 210 is returned to the basic display B (the first in rows and the second in columns from left in Fig. 10).

When the controller 253 of the self-checkout terminal 101 determines the current weight decreases compared to the former weight (N of step S207), the decreased weight is recorded to the weight check file WCF shown in Fig. 13 (A) (step S217) on condition that the error status is not 1 (N of step S216), and the former weight of the weight check file WCF with respect to the current weight (step S218) . That is, in this case, the article should have been removed, which was once placed on the placing part (the placing table 303a and the temporary placing table 306) of the scale device 301 after the article information registration. Such situation might be expected to happen for a customer who brings his/her child. To be specific, it might happen easily that the child takes away a snack, for example, which was once placed on the placing part (the placing table 303a and the temporary placing table 306) of the scale device 301 during the parents' operation of the self-checkout terminal 101. Thus, in this example, when such situation happens, the article information itself has already been registered, so the situation is allowed not to be treated as an error. In short, the former weight of the weight check file WCF with respect to the current weight as described above (step S218). Then, the process returns to the current weight referring process of the step S203. Therefore, when the article, the article code of which has been input (step S217), is removed one after another from the placing part (the placing table 303a or the temporary placing table 306), the controller 253 of the shelf-checkout terminal 101 records a decreased weight one after another as a decreased weight 1, a decreased weight 2, a decreased weight 3, ... to the weight check file WCF whenever the weight decrease is determined (step S217).

However, when it is determined that there is no identity between the weight A and the weight B at the step S209 is not determined (Y of step S209), the article, the article code of which has not been input yet, must be placed on the placing part (the placing table 303a or the temporary placing table 306) of the scale device 301 with a wrong operation or a wrongdoing. Therefore, it is not always the case that the article placed on the placing part with a wrong operation or a wrongdoing was removed. For instance, when an expensive article is wrongly bagged into the shopping bag 401 so that the identity between the weight A and the weight B is not determined (N of step S209), an inexpensive article is removed from the shopping bag 201 and it might be determined that there is the weight decrease at the step 5207. In this case, if the former weight of the weight check file with respect to the current weight, a wrong operation or a wrongdoing will be overlooked. Thus, it is determined whether the error status = 1 or not at the step S216, and if the error status = 1 (Y of step S216), the process returns to the current weight referring process of the step S203 again. In short, when the article, the article code of which has not been input yet, is placed on the placing part (the placing table 303a or the temporary placing table 306) of the scale device, the former weight of the weight check file WCF with respect to the current weight (step S218) only after it is firmly confirmed that the article has been removed (step S206, N of step S216).

Further, there is a possibility that the article, the article information of which had been registered and placed on the placing part (the placing table 303a or the temporary placing table 306) of the scale device 301, was removed, and is placed back to the placing part. For an example, the child removes a snack or the like, which was once placed on the placing table 303a, and the parents realize it and return the snack to the shopping bag 401 again. In this case, the former weight of the weight check file WCF is updated to the increased current weight by the process of the step S218, so the weight change with respect to the former weight is determined (Y of step S204), and the weight increase is determined (Y of step S207). A weight calculated at the step S208 that (the current weight) - (the former weight) = the weight B is for the article after the article information registration bagged in the shopping bag 401 again. Therefore, it is determined that there is no identity between the weight A and the weight B at the step S209, so the error announcement would be executed (step S213). However, it is inappropriate for a practical operation. Thus, in this case, a cause presumption process is executed (step S210). This process determines whether the article which had once been placed on the placing part (the placing table 303a or the temporary placing table 306) of the scale device 301 after the article information registration and was removed, is placed back to the placing part again, or not (steps S211 and S212). That is, the cause presumption process of the step S210 presumes that the article which was once removed, is placed back to the placing part again by seeing that the increased weight accords with one of combinations of the decreased weights, the history of which is recorded in the weight check file WCF shown in Fig. 13(A).

Here, there would be two situations that the article, the article information of which has been registered, is placed back. One is that the article, the article information of which has been registered, is returned to the placing place (the placing table 303a or the temporary placing table 306) of the scale device 301 with an article, an article code of which has already been input but an article information of which has not been yet registered. The other is that only the article, the article information of which has been registered, is returned to the placing part (the placing table 303a or the temporary placing table 306) of the scale device 301.

In the former case, the identity between the weight A and the weight B is not determined at the step S209. That is, the weight B is not included within the weight A's range. This is because the weight B is heavier by the article, the article information of which has been registered. Thus, in this case, it is determined whether the decreased weight of the article with the article information registration is added to the weight of the article without registration (step S211). If a result is affirmative (Y of step S211), there would be no wrong operation or no wrongdoing, so the controller 253 of the self-checkout terminal 101 updates the former weight as the current weight in the weight check file WCF shown in Fig. 13(A) (step S215) and ends the process.

Meanwhile, in the latter case, the identity between the weight A and the weight B is not normally determined at the step S209. That is, the weight B is not included to the weight A's range. It is because the weight A is the weight for the article, the article code of which has already been input but the article information of which has not yet been registered while the weight B is the weight for the article, the article information of which has already been registered, thus they are normally different. Thus, in this case, when whether the decreased weight of the article, the article information of which has already been registered, is added to the weight of the non-registered article or not is determined (step S211), the result must be negative (N of step S211). Therefore, it is determined whether the decreased weight of the article, the article information of which has already been registered, accords with the increased weight (step S212) . If the result is affirmative (Y of step S212), the process goes to the step S218 and updates the former weight of the weight check file WCF shown in Fig. 13(A) as the current weight.

As described above, the determination process of the step S211 presumes the article, the article information of which has already been registered, is returned to the placing part (the placing table 303a or the temporary placing table 306) of the scale device 301 together with the article, the article code of which has already been input but the article information of which has not yet been registered. Meanwhile, the determination process of the step S212 presumes only the articles, the article information of which has been already registered, are returned to the placing part (the placing table 303a or the temporary placing table 306) of the scale device 301. Therefore, it is necessary for the step S210 to execute a process which is possible to presume both determination processes (steps S211 and S212).

Therefore, in order to presume whether the article, the article information of which has been already registered and was once removed from the placing part (the placing table 303a or the temporary placing table 306), is placed back to the placing part again or not for the determination process of the step S211, the presumption process of step S210 determines whether the weight, which is the difference between the weight value transmitted from the scale device 301, and the weight value, which is obtained by adding the one or more weight value obtained from the decreased weight history (the decreased weight 1, 2, 3, ··· N) to the former weight stored in the weight check file WCF, is included within the weight range of the weight A acquired by the search process of the step S202 (the second determination process). As described in the explanation of the cause presumption process (step S108) of Fig. 14, one or more weight value, which are obtained from the decreased weight history (the decreased weight 1, 2, 3, ··· N) in the weight check file WCF, can be obtained by the combination of the decreased weights 1, 2, 3, ··· N. For instance, when the decreased weight 1 is 15g, the decreased weight 2 is 20g, the decreased weight 3 is 30g, and after the decreased weight 4 is null, the combinations of the decreased weights are the following seven combinations;
15 (g)
20 (g)
30 (g)
15+20=35 (g)
15+30=45 (g)
20+30=50 (g)
15+20+30=65(g)

Here, the controller 253 of the settlement terminal 201 obtains the weight value transmitted from the scale device 301, and the seven weight values calculated by adding 15 (g), 20 (g), 30 (g), 35 (g), 45 (g), 50 (g), and 65 (g) to the former weight stored in the weight check file WCF respectively. Then, the controller 253 determines whether one of seven weight values, which are differences between the weight value transmitted from the scale device 301 and the obtained seven weight values, is included within the weight range of the weight A acquired by the search process of the step S202 (the second determination process).

Further, the presumption process of the step S210 determines whether one or more increased weight values obtained from the decreased weight history (the decreased weight 1, 2, 3, ···, N) accord (s) with the former weight stored in the weight check file WCF in order to presume whether only the article, the article information of which was registered and removed from the placing part and a weight cause of the former weight, is returned to the placing part again (the third determination process). As described above, when the decreased weight 1 is 15g, the decreased weight 2 is 20g, the decreased weight is 30g, and after the decreased weight 4 is null in the weight check file WCF, there are seven combinations as the decreased weight combinations that 15 (g), 20 (g), 30 (g), 35 (g), 45 (g), 50(g), and 65(g). Thus, the controller 253 of the settlement terminal 201 determined whether the increased weight value, that is, the weight B obtained at the step S208 accords with any of 15(g), 20(g), 30(g), 35(g), 45(g), 50(g), or 65(g) (the third determination process).

The second determination process and the third determination process are the presumption process of the step S210. The determination process of the step S211 is the process which determines which step a following process goes to either the step S212 or the step S215 based on a result of the second determination process, which is one of the presumption processes executed at the step S210. The determination process of the step S121 is the process which determines which step a following process goes to either the step S213 or the step S218 based on a result of the third determination process, which is one of the presumption processes executed at the step S210.

As described above, the weight check process does not end until the process that the former weight at the step S215 in Fig. 16 with respect to the current weight is gone through on condition that either it is determined that there is the identity between the weight A and the weight B at the step S209 in Fig. 16 (Y of step S209), or the weight of the article, which is the decreased weight at the step S211 in Fig. 16 and the article information of which has been already registered, is added to the unregistered article weight (Y of step S211).

### (ii) ANOTHER EXAMPLE

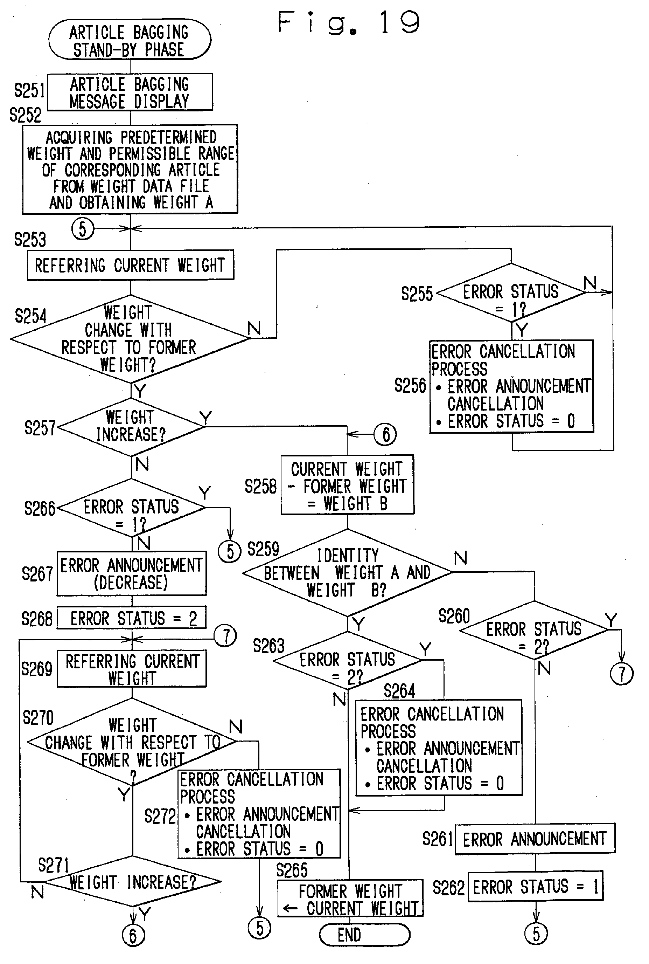

Fig. 17 is a flowchart showing another example of a flow of the weight check process. Firstly, the controller 253 of the self-checkout terminal 101 stands by for registering article information when a start of a self-checkout process is assigned. The weight check process stands by for determining whether an article code is input or not (step S151). When the input of the article code is determined (Y of step S151), the process goes to an article bagging stand-by phase, a detail process of which will be shown in Fig. 19 (step S152) . The article bagging stand-by phase ends by the article, the article code of which is input, being placed on the placing part (the placing table 303a or the temporary placing table 306) of the scale device 301 and is gone through a weight check (see steps S259 and S265 of Fig. 19). While, when it is determined to stand by for inputting the article code (N of step S151), the current weight stored in the weight check file WCF shown in Fig. 13 (A) is referred (step S153) and it is determined that there is a weight change with respect to the former weight similarly stored in the weight check file WCF shown in Fig. 13 (B) (step S154). The determination to stand by for inputting the article code (N of step S151) is executed either when no article code is input after the start of the self-checkout process was assigned, or when the article bagging phase for a former article is normally completed.

As mentioned above, the former weight will be 0 (g) when no article code is input. When later the article code is input, the former weight means a weighed value by the scale device 301 in a status that all articles, the article codes of which are input, are placing on the placing part (the placing table 303a or the temporary placing table 306) in principle. So, it must not be determined that there is a weight change with respect to the former weight at the step S154 as for as normal operation is performed. Therefore, if it is determined that there is no weight change with respect to the former weight at the step S154 (N of step S154), the process returns to the determination process whether an article code is input or not at the step S151.

Meanwhile, when the article, the article code of which has not yet been input, is placed on the placing part (the placing table 303a or the temporary placing table 306) of the scale device 301, the current weight exceeds the former weight, or, if the article, the article information of which has been registered and placed on the placing part, is removed, the current weight falls below the former weight. Therefore, after it is determined that there is the weight change with respect to the former weight (Y of step 154), the step S155 determines whether the weight increases or not, that is to say, whether the current weight increases or decreases compared to the former weight.

When the current weight increases compared to the former weight (Y of step S155), the controller 253 of the self-checkout terminal 101 executes an error announcement (step S110). That is , in this case, there must be a wrong operation or a wrongdoing that the article , the article code of which has not been yet input, is placed on the placing part (the placing table 303a or the temporary placing table 306) of the scale device 301. So, the controller 253 changes an emission color of the emission part 218 provided at the tip part of the display pole 217 from blue to red so as to announce a shop assistant (an attendant) that there was a wrong operation or a wrongdoing. Additionally, a weight error display D1 is displayed on the LCD210 of the self-checkout terminal 101 (see Fig. 15).

Then, if it is determined that the current weight = the former weight (step S158) by referring the current weight which is shown in Fig. 13(A) and is temporarily stored at the step S52 in Fig. 12 (step S157), the article, which had once been placed on the placing part (the placing table 303a or the temporary placing table 306) of the scale device 301 with a wrong operation or a wrongdoing, must have been removed and returned. Thus, an error cancellation process is executed at the step S159. The error cancellation is executed by a cancellation of the error announcement. That is, the controller 253 of the self-checkout terminal 101 returns brightness of the user area B2 in the basic display B and cancels the weight error display D1. Thereby, the display of the LCD210 returns to the basic display B (the first in rows and the second in columns from left in Fig. 10).

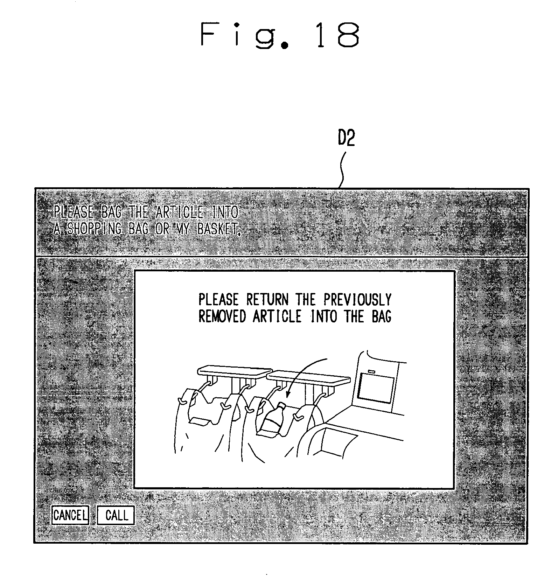

When the controller 253 of the self-checkout terminal 101 determines the current weight decreases compared to the former weight (N of step S155), the article, the article information of which was registered and placed on the placing part (the placing table 303a or the temporary placing table 306) of the scale device 301, must be removed. It is expected that such situation would happen frequently for a customer who brings his/her child. That is, the child removes a snack, for example, which was once placed on the placing part (the placing table 303a or the temporary placing table 306) of the scale device 301 during the parents' operation of the self-checkout terminal 101. Thus, when such situation happens, this example executes the error announcement (step S160). That is, in this case, the controller 253 changes the emission color of the emission part 218 provided at the tip part of the display pole 217 from blue to red so as to announce the shop assistant (the attendant) that there was a wrong operation or a wrongdoing. Additionally, the weight error display D2 is displayed on the LCD210 of the self-checkout terminal 101 (see Fig. 18).

Fig. 18 is an exemplary diagram showing an example of a weight error display D2 when the article is removed from the placing table as a result of the weight check process. The controller 253 determines that the current weight decreases compared to the former weight (N of step S155), the controller 253 reduces the brightness of the basic display B, generates the weight error display D2 as shown in Fig. 18, and displays it to lap over the basic display B. The weight error display D2 displays an explanation that "Please returns the article which was previously removed from a shopping bag" with a picture for assisting the explanation thereof.

Later, the current weight shown in Fig. 13(B) and temporarily stored at the step S52 shown in Fig. 12 is referred, if it is determined that the current weight = the former weight (step S162), the article, the article information of which was registered and placed on the placing part (the placing table 303a or the temporary placing table 306) of the scale device 301, must be removed and then be returned, so an error cancellation process is executed at the step S163. The error cancellation process is executed by a cancellation of the error announcement. That is, the controller 253 of the self-checkout terminal 101 returns the brightness of the user area B2 in the basic display B and cancels the weight error display D2. Thereby, the display of the LCD 210 returns to the basic display B (the first in rows and the second in columns from left in Fig. 10).

Fig. 19 is a flowchart showing another example of a flow of the weight check process at the article bagging stand-by phase. Firstly, when the controller 253 of the self-checkout terminal 101 determines that the article code is input at the step S 151 (Y of step S151), the process goes to the article bagging stand-by phase (step S152). The article bagging stand-by phase, the process flow of which is shown in Fig. 19, displays an article bagging message on the LCD 210 (step S251). The article bagging message is shown by guidance that "Please bag the article in the shopping bag or my basket" in the guidance display area in Fig. 10 and is shown by guidance that "Please place the article on the temporal placing table" in the guidance display area B1.

At the following step S252, the controller 253 of the self-checkout terminal 101 searches the weight data file WDF (see Fig. 7 (B)) which constitutes the article data file, acquires a predetermined weight of correspond article defined as a predetermined weight and its permissible range (an upper limit permissible value and a lower limit permissible value), and obtains a weight A. The weight A is a range of the upper limit permissible value and the lower limit permissible value with respect to the predetermined weight, which are respectively stored in the data file WDF shown in Fig. 7. For instance, when the predetermined weight is 310(g), and the upper limit permissible value and the lower limit permissible value are 10 (g), the weight A is to be 300~320(g).

Next, the current weight temporarily stored as the current weight in the weight check file WCF shown in 13 (B) by the step S52 in Fig. 12 is referred (step S253), and it is determined that the weight change with respect to the former weight temporarily stored in the weight check file WCF (step S254).

At this point, the article, the article code of which has been input, must be placed on the placing part (the placing table 303a or the temporary placing table 306) of the self-checkout terminal 101 at the article bagging stand-by phase. Meanwhile, the process returns to the current weight referring process at the step S253 followed by the processes of steps S255 and S256 described later until the article is placed on the placing part. Then, when the article is placed on the placing part (the placing table 303a or the temporary placing table 306), the weight change of the current weight with respect to the former weight is determined at the step S254 (Y of step S254), and the increase of the current weight with respect to the former weight is determined at the followed step S257 (Y of step S257). Here, in this case, it is determined that (the current weight) - (the former weight) = the weight B (step S258), and the identity between the weight A acquired at the step S252 and the weight B is determined (step S259). The determination of identity between the weight A and the weight B is executed by seeing whether the weight B is included with the range of the weight A or not. As a result, when the controller 253 of the self-checkout terminal 101 determines the identity between the weight A and the weight B (Y of step S265), the controller 253 updates the former weight as the current weight in the weight check file WCF shown in Fig. 13 (B) (step S265) followed by the processes of the steps S263 and S264 described later, and ends the process.

In the meantime, when the article, the article code of which has not been input yet, is placed on the placing part (the placing table 303a or the temporary placing table 306) of the scale device 301, the identity between the weight A and the weight B will not be determined unless the weight of the article and the article, the article code of which has been input, have identity in weight. Therefore, in this case, the controller 253 of the self-checkout terminal 101 executes the error announcement as described above (step S261) followed by the process of the step S260 described later. That is, in this case, the article must be placed on the placing part (the placing table 303a or the temporary placing table 306) of the scale device 301 by a wrong operation or a wrongdoing, the controller 253 changes the emission color of the emission part 218 provided at the tip part of the display pole 217 from blue to red so as to inform the shop assistant (the attendant) that there was a wrong operation or a wrongdoing. Additionally, the weight error display D1 is displayed on the LCD210 of the self-checkout terminal 101 (see Fig. 15). Then, the controller 253 sets the error status = 1 to the RAM 254, and returns to the current weight referring process of the step S253.

Thereafter, when the controller 253 of the self-checkout terminal 101 does not determine the weight change with respect to the former weight at the step 254 (N of step S254), the article is considered to be returned, which was once placed on the placing part (the placing table 303a or the temporary placing table 306) of the scale device 301 by a wrong operation or a wrongdoing. Thus, the process goes through the determination routine that the error status = 1 at the step S255 (Y of step S255), and the error cancellation process is executed at the step S256. The error cancellation process is executed by a cancellation of the error announcement and a setting of the error status = 0. That is, the controller 253 of the self-checkout terminal 101 returns the brightness of the user area B2 in the basic display B to a former brightness and cancel the weight error display D1. Thereby, the display of the LCD210 is returned to the basic display B (the first in rows and the second in columns from left in Fig. 10).

When the controller 253 of the self-checkout terminal 101 determines the current weight decreases compared to the former weight at the step S257 (N of step S257), the error announcement is executed on condition that the error status is not 1 (N of step S266). That is, in this case, the article, the article information of which was registered and placed on the placing part (the placing table 303a or the temporary placing table 306) of the scale device, must be removed. Such situation might happen frequently for a customer who brings his/her child as an example. To be specific, such situation might happen that the child removes a snack or the like, which was once placed on the placing part (the placing table 303a or the temporary placing table 306) of the scale device 301 during the operation of the self-checkout terminal 101 by the parents. Thus, in such situation, the error announcement is executed (step S267). That is, the controller 253 changes the emission color of the emission part 218 provided at the tip part of the display pole 217 from red to blue so as to inform the shop assistant (the attendant) that there was a wrong operation or a wrongdoing. Additionally, the weight error display D2 is displayed on the LCD210 of the self-checkout terminal 101 (see Fig. 18). Then, the controller 253 sets the error status = 2 to the RAM 254 (step S268).

Then, the controller 253 of the self-checkout terminal 101 refers to the current weight temporarily stored as the current weight in the weight check file WCF shown in Fig. 13 (B) at the step S52 in Fig. 12, and determines the weight change with respect to the former weight temporarily stored in the weight check file WCF (step S270). Then if there is the weight change (Y of step S270), whether the weight change is a weight increase or a weight decrease is determined (step S271) . In this case, the article, the article information had been registered and placed on the placing part, was removed. So, the weight change is determined for the current weight with respect to the former weight referred at the step S269 (Y of step S270), and the change must be a weight decrease at the step S271 (N of step S271). When the weight change is determined that the weight decrease (step S271), the process returns to the current weight referring process at the step S269.

Meanwhile, when the article, the article information of which was registered and removed from the placing part (the placing table 303a or the temporal placing table 206) of the scale device 301, is returned to the placing table again, the current weight is referred (step S269), and it is determined in the following step S270 that there is no weight change for the current weight with respect to the former weight (N of step S270). Here, the controller 253 of the self-checkout terminal 101 executes the error cancellation process at the step S272. The error cancellation process is executed by a cancellation of the error announcement and a setting of error status = 0. That is, the controller 253 of the self-checkout terminal 101 returns the brightness of the user area B2 in the basic display B and cancels the weight error display D2. Thereby, the display of the LCD210 is returned to the basic display B (the first in rows and the second in columns from left in Fig. 10).

When the article, the article information of which had been registered and been placed on the placing part (the placing table 303a or the temporary placing table 306) of the scale device 301, and was removed from the placing part, is now returned to the placing part with an article, the article code of which has already been input but the article information of which has not been registered yet, it is determined that there is a weight change for the current weight with respect to the former weight (Y of step S270). And it should be determined that the weight change is a weight increase (Y of step S271). Thus, in this case, the process goes to the process of step S258. That is, (the current weight) - (the former weight) = the weight B is set up (step S259), an identity between the weight B and the weight A acquired at the step S252 is determined (step S259). An expected situation here is that the article, the article information of which had been registered and placed on the placing part (the placing table 303a or the temporary placing table 306) of the scale device 301, was removed and is now returned to the placing part with the article, the article code of which has already been input but the article information of which has not been registered yet. Thus, the controller 253 of the self-checkout terminal 101 determines there is the identity between the weight A and the weight B (Y of step S259). Then, at this point, since the error status still remains 2, the step S263 determines the error status = 2 (Y of step S263), and the error cancellation process is executed at the step S264. The error cancellation process is executed by a cancellation of the error announcement and a setting of the error status = 0. That is, the controller 253 of the self-checkout terminal 101 returns the brightness of the user area B2 in the basic display B to the former brightness and cancels the weight error display D2. Thereby, the display of the LCD210 is returned to the basic display B (the first in rows and the second in columns from left in Fig. 10). Then, the former weight with respect to the current weight in the weight check file WCF shown in Fig. 13 (B) (step S265), and the process ends.

Meanwhile, another situation that the weight increase is determined at the step S271 is expected where another article is placed on the placing part, an article code of which has not been input yet and is heavier than the article, the article information of which had been registered and placed on the placing part (the placing table 303a or the temporary placing table 306) of the scale device 301 and removed from the placing part. This example goes to the process of the step S258 without any differentiation with the situation where the article, the article information of which had been registered and placed on the placing part, was removed from the placing part and then is placed on the placing part again with the article, the article code of which has already been input but the article information of which has not been registered yet. That is, (the current weight) - (the former weight) = the weight B is set up (step S258), and the identity between the weight B and the weight A acquired at the step S252 is determined (step S259). However, the situation expeted here is that another article, the article code of which has not been input yet and is heavier than the article, the article information was registered and removed from the placing part (the placing table 303a or the temporary placing table 306) of the scale device 301, is placed on the placing part. Therefore, the controller 253 of the self-checkout terminal 101 does not determine the identity between the weight A and the weight B at the step S259 (N of step S259). At this point, the error status remains 2. Thus, the step S260 determines the error status = 2 (Y of step S260), and the process returns to the current weight referring process of the step S269. That is, according to this example, when the article, the article information of which had been registered and placed on the placing part (the placing table 303a or the temporary placing table 306) of the scale device 301, was removed, the process can not go through the process routine from the steps S269 to S271 unless the removed article is placed back on the placing part.

Further, when the identity between the weight A and the weight B is not determined at the step S259 (N of step 259), the article, the article code of which has not been input yet, must be placed on the placing part (the placing table 303a or the temporary placing table 306) of the scale device 301. Thus, even though the weight decrease is determined thereafter (N of step S257), it is not always the case that the article, which was placed on the placing part (the placing table 303a or the temporary placing table 306) with a wrong operation or a wrongdoing, is removed from the placing part. For example, though the identity between the weight A and the weight B is not determined because an article is bagged in the shopping bag 401 with a wrong operation (N of step 5259), it might be determined that a weight decrease is determined at the step S257 by removing another article from the shopping bag 401. In this case, even if the weight decrease is determined at the step 257 (N of step S257), there is a high possibility that the process can not go through the process routine from the steps S269 to S271 as it turned out when the process goes to the process of the step S267. Therefore, when the weight decrease is determined (N of step S257), whether the error status = 1 is determined at the step S266, and if the error status = 1 (Y of step 5266), the process returns to the current weight referring process of step S253 again. That is, when the article, the article code of which has not been input yet, is placed on the placing part (the placing table 303a or the temporary placing table 306) of the scale device 301, and after it is firmly confirmed that the article was returned (steps S256, N of step S266), the process goes to the process of step S267.

As described above, the weight check process does not end after the process that the former weight with respect to the current weight at the step S265 in Fig. 19 on condition that the identity between the weight A and the weight B is determined at the step S259 in Fig. 19 (Y of step S259). Therefore, if the weight check process does not end, the process does not go to the following article information registration process (step S14 in Fig. 9), so the article sales data processing does not proceed. In other words, when the error announcement process in Fig. 17 (steps S156 and S161) or the error announcement process in Fig. 19 (steps S261 and S267), the article information registration process (step S14 in Fig. 9) is cancelled. On the other hand, at the article bagging stand-by phase, when the error announcement is executed for the weight decrease (step S267), even if not only the article, the article information of which was registered and placed on the placing part (the placing table 303a or the temporary placing table 306) of the scale device 301 and removed, is placed on the placing part, but also even if the article, the article information of which is to be registered, is placed on the placing part, the weight check process can be normally terminated (Y of step S271, Y of step 5259) .

### (iii) SKIP OF THE WEIGHT CHECK PROCESS

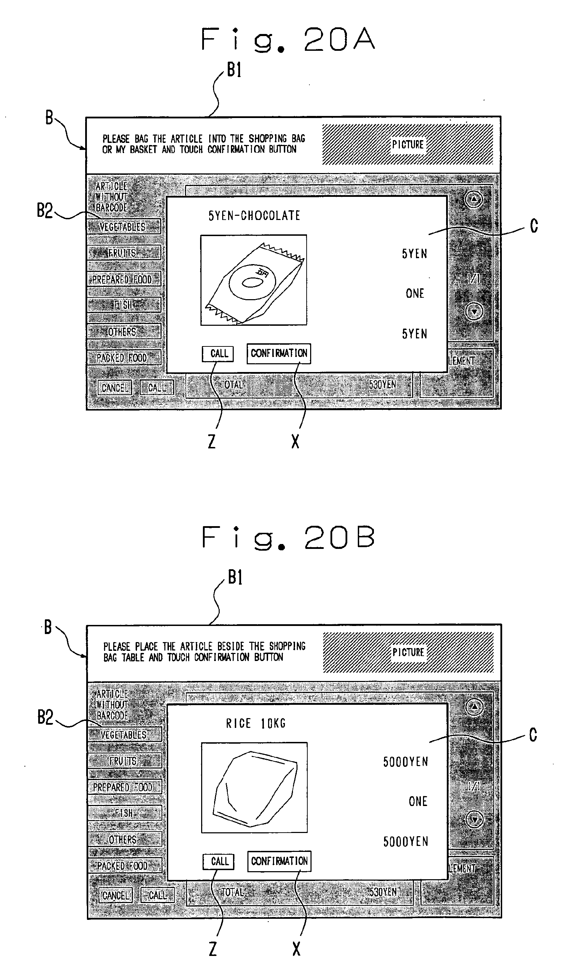

Fig. 20 is an exemplary diagram showing a basic display B and a reading confirmation display C of a weight check exempted article. As described above, the settlement terminal 201 has the definition of whether a weight check is executed or not. Therefore, the controller 253 refers the definition of whether a weight check is executed or not, and for an article defined not to be executed the weight check, a confirmation button X is displayed on the reading confirmation display C and the weight check process is skipped. Then, when the confirmation button X is assigned by the touch panel 211 at the reading confirmation display C, the controller 253allows the article sales data processing to proceed, returns the brightness of the user area B2 in the basic display B and cancels the reading confirmation display C. Thereby, the display of the LCD 210 returns to the basic display B (the first in rows and the second in columns from left in Fig. 10).

As can be seen, the weight check process is skipped for the weight check exempted article. As shown in Fig. 20 (A), in spite of skipping the weight check process, the guidance display area B1 after the barcode affixed to the article is read displays a guidance showing an explanation that "Please bag the article into a shopping bag or my basket and touch the confirmation button" with a picture for assisting the explanation.

Here, as explained based on Fig. 11, the guidance display area B1 displays the placing location for the article after the barcode-is read, according to the article placing location definition (the article bagging skip) of the weight data file WDF. Therefore, as shown in Fig. 20 (B), the controller 253 makes the guidance display area B1 to display an explanation that "Please place the article beside the shopping bag table and touch the confirmation button" with a picture for assisting the explanation for the article, the placing location of which is defined as the floor by the article placing location definition (the article bagging skip).

### (4) ARTICLE INFORMATION REGISATRATION THROUGH DISPLAY INPUT

Now go back to the explanation based on Fig. 10. As described above, the first initial guidance display A (the first in rows and the first in columns from left in Fig. 10) displays an explanation that "An article without a barcode will be registered at the next display" with a picture depicting "the next display". By this, the controller 253 prepares article assignment buttons B22, which consist of six touch buttons that "Vegetables", "Fruits", "Prepared Food", "Fish", "others", and "Packed Food" in the user area B2 in the basic display B (the first in rows and the second in columns from left in Fig. 10) as an image for registration of an article without a barcode. Here, when an article to be purchased does not have a barcode, a customer touches and assigns the article assignment buttons B22 through the touch panel 211. Upon an assignment of any of the article assignment button B22s through the touch panel 211, the transaction information B21 of the user area B2 in the basic display B is switched and displayed to a category selection display E (the second in rows and the second in columns from left in Fig. 9).

The category selection display E (the second in rows and the second in columns from left) in Fig. 10 shows an example that "Prepared Food" is assigned through the touch panel 211. In this case, sixteen kinds of various foods included in the "Prepared Food" category is displayed by a scrolling display in four by four array in rows and columns. The category selection display E displays a return button E1. When the return button E1 is assigned through the touch panel 211, the category selection display E is switched and displayed to the transaction information B21, and is returned to the basic display B (the first in rows and the second in columns from left in Fig. 10).

When the transaction information B21 of the user area B2 in the basic display B is switched and displayed to the category selection display E (the second in rows and the second columns from left in Fig. 10), the controller 253 lets the guidance display area B1 to display an explanation that "Please touch the button of the article you have" with a picture for assisting the explanation. By this, the customer can get to know what operation he/she would do next.

Thus, the customer touches and assigns one food through the touch panel 211 from the category selection display E (the second in rows and the second in columns from left in Fig. 10) according to the guidance, a category registration display F for the food appears on the user area B2 in the basic display B (the second in rows and the third in columns from left in Fig. 10). The category registration display F in Fig. 10 (the second in rows and the third in columns from left) shows an example that "Egg Tofu" is touched and assigned. In this case, the category registration display F regarding "Egg Tofu" appears. The category registration display F includes the transaction information such as the article price, a discount price, a quantity to be purchased, and the purchased price. The category registration display F also includes a character based on text data of a name regarding the article, a picture based on image data regarding the article, and numeric keys. The numeric keys enable to change an input of the quantity to be purchased for the article that the default setting is 1. These various kinds of data is cited from information recorded in the category file, which is separately provided in the settlement terminal 201 from the PLU file PF. Also, a cancellation button F1 and a decision button F2 are included in the category registration display F. When the cancellation button F1 is touched and assigned through the touch panel 211, the category registration display F returns to the display (the second in rows and the second in columns from left in Fig. 10) in which the category selection display E of the user area B2 in the basic display B is displayed.

When the category registration display F is displayed on the user area B2 in the basic display B (the second in rows and the third in columns from left in Fig. 10), the controller 253 lets the guidance display area B1 to display an explanation that "Please input by the numeric key and touch "Decision" button when change the quantity" with a picture for assisting the explanation. Thereby, the customer can get to know what operation he/she would do next.

Thus, according to the guidance, when the customer inputs and changes a purchase number with the numeric keys as necessary at the category registration display F (the second in rows and the third in columns from left in Fig. 10), and then touches and assigns the decision button F2 through the touch panel 211, the category registration of the selected food, "Egg Tofu" in the example shown in Fig. 10, is registered by the default number or the quantity changed with the numeric keys. Here, the controller 253 reduces the brightness of the basic display B displayed on the LCD 210, generates the reading confirmation display C, and laps the generated reading confirmation display C over the user area B2 (the second in rows and the fourth in columns from left in Fig. 10). Additionally, the controller 253 transits the display in the guidance display area B1 in the basic display B into a guidance display that "please bag the article into the shopping bag or my basket" (the second in rows and the fourth in columns from left in Fig. 10). Although not shown in Fig. 10, the controller 253 also transits the picture for assisting the operation to bag the article into the shopping bag or my basket shown in the guidance display area B1. By displaying the reading confirmation display C not to be lapped over the guidance display area B1, it is possible for the customer to confirm the guidance display and its transition in the guidance display area B1 easily.

Here, when the five kinds of the article assignment buttons B22 of "Vegetables", "Fruits", "Fish", and "Others" are touched and assigned through the touch panel 211, that is, all buttons except "Packed Food" of the article assignment buttons B22 are touched and assigned, and the category registration is executed after the reading confirmation display C is displayed to lap over the user area B2 in the basic display B, the weight check process is executed. That is, this process has identity to the process after the barcode affixed to the article, is read by the barcode scanner 203. Thus, an explanation of following processes will be omitted.

### (5) PACKED ARTICLE INFORMATION REGISTRATION

### (i) INPUT METHOD FOE THE PACKED ARTICLE

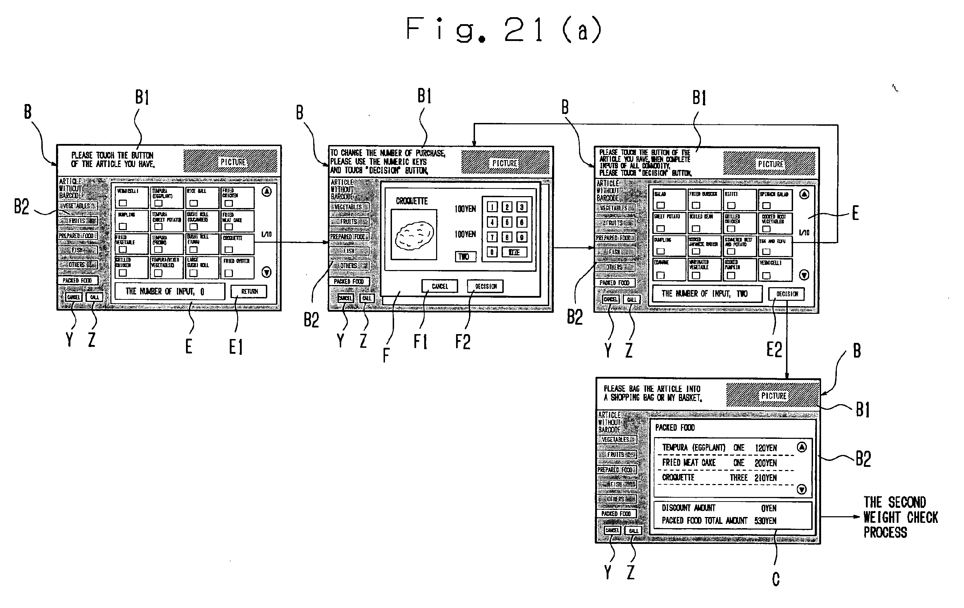

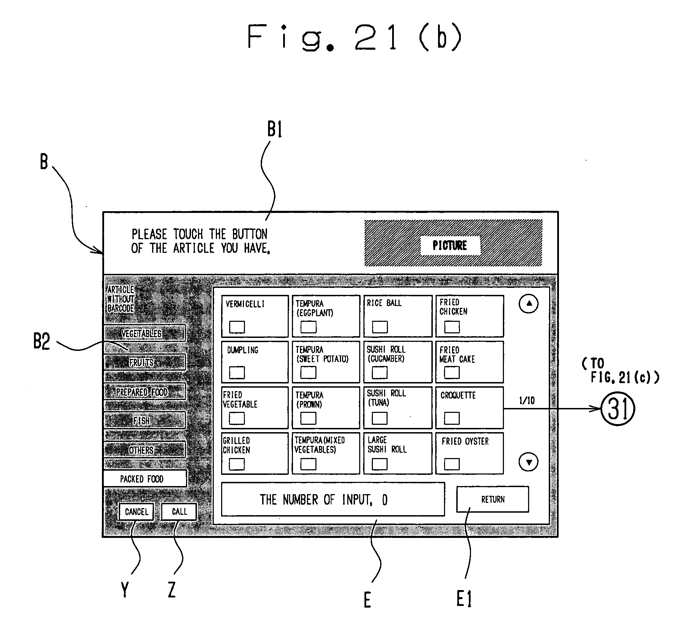

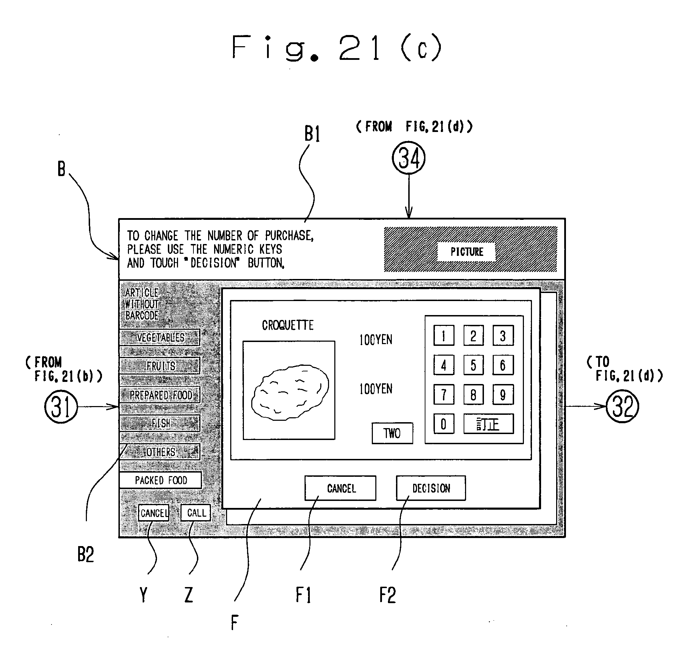

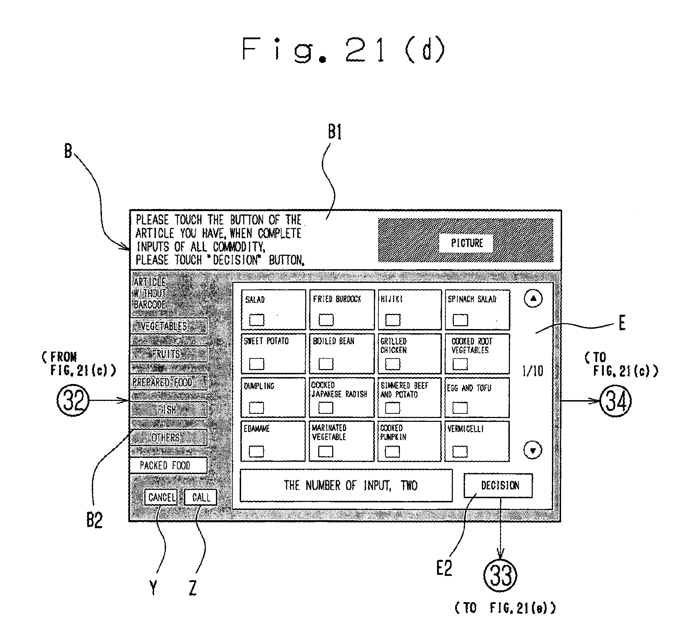

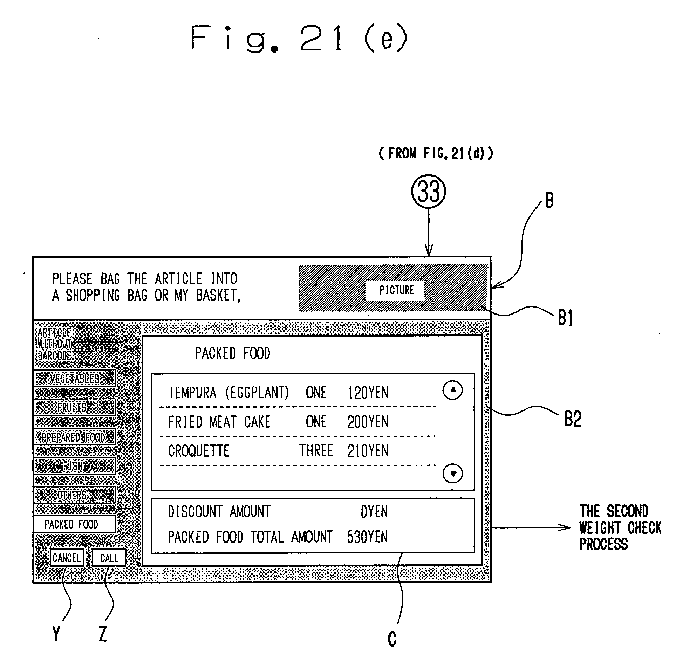

Fig. 21 is an exemplary diagram showing a display transition at a self-checkout process execution for a packed article. "Packed Food" set in the article assignment buttons B22 in the first basic display B (the first in rows and the second in columns from left in Fig. 10) means a packed article. It is common in a supermarket a corner is provided where various foods such as fry, tempura, grilled chicken, and so on are placed, and a customer can freely pack any of them. The article to be packed at such the corner is "Packed Food".

When the article assignment button 22 of "Packed Food" is touched and assigned at the first basic display B (the first in rows and the second in columns from left in Fig. 10), the controller 253 reduces the brightness of the user area B2 in the basic display B displayed on the LCD 210, generates the category selection display E in order to switched and display the transaction information B21 displayed in the user area B2, and display the category selection display E on the LCD 210 (the first in rows and the first in columns from left in Fig. 21). The category selection display E displays sixteen kinds of various foods included to the "Packed Food" category by a scrolling display in four by four array in rows and columns.

When the transaction information B21 of the user area B2 in the basic display B is switched and displayed into the category selection display E (the first in rows and the first in columns from left in Fig. 21), the controller 253 lets the guidance display area B1 to display an explanation that "Please touch the button of the article you have" with a picture for assisting the explanation. Thereby, the customer can get to know what he/she would do next.

Thus, when one of the category selection display E regarding "Packed Food" is touched and assigned through the touch panel 211, the controller 253 generates the category registration display F for the food, and lets the user area B2 to display the generated category registration display F for the food while keeping the brightness to be reduced of the user area B2 in the basic display B (the first in rows and the second in columns from left in Fig. 21). Fig. 21 shows an example that "Croquette" is touched and assigned. In this case, the category registration display F regarding "Croquette" appears (the first in rows and the second in columns from left in Fig. 21). The category registration display F includes the transaction information such as the article price, a discount price, a number to be purchased, and a purchasing price. The category registration display F also includes a character based on text data of an article name of the article, a picture based on an image data of the article, and numeric keys. The numeric keys enable a change of input of the quantity to be purchased for the default setting is 1. In the example shown in Fig. 21, the quantity to be purchased is input and changed to 2 with the numeric keys.

When the category registration display F is displayed on the user area B2 in the basic display B (the first in rows and the second in columns from left in Fig. 21), the controller 253 lets the guidance display area B1 to display an explanation that "Please input by the numeric key and touch "Decision" button for change the purchasing number" with a picture for assisting the explanation. Thereby, the customer can get to know what operation he/she would do next.

Thus, when the decision button F2 is touched and assigned through the touch panel 211 after the change of the quantity to be purchased with the numeric keys at the category registration display F (the first in rows and the second in columns from left in Fig. 21) if necessary according to the guidance, the category registration regarding the selected food, "Croquette" in the example shown in Fig. 21 is registered by the default number or the quantity to be purchased which was changed and input with the numeric keys. Thereafter, the controller 253 does not let the reading confirmation display C to be displayed (the second in rows and the fourth in columns from left in Fig. 21), and lets the category selection display E to be displayed (the first in rows and the third in columns from left in Fig. 21) . Here, after the second category selection display E displays the decision button E2 instead of the return button E1. Therefore, a food displayed on the category selection display E can be registered repeatedly until the decision button E2 is touched and assigned through the touch panel 211.

At after the second category selection display E (the first in rows and the third in columns from left in Fig. 21), the controller 253 lets the guidance display area B1 to display an explanation that "Please touch the button for the article you have and touch "Decision" button after registrations of all packed foods" with a picture for assisting the explanation. Thereby, the customer can get to know what operation he/she would do next.

Thus, the customer repeats the operation for the registration by the category selection display E and the category registration display F according to the guidance for all foods that he/she packed. When the registration for all the packed foods is completed, the customer touches and assigns the decision button E2 through the touch panel 21. Thereby, the controller 253 generates the reading confirmation display C and laps the generated reading confirmation display C over the user area B2 (the second in rows and the third in columns from left in Fig. 21). Additionally, the controller 253 transits the guidance display area B1 in the basic display B into a guidance display that "Please bag the article into the shopping bag or my basket" (the second in rows and the third in columns from left in Fig. 21).

### (ii) SECOND WEIGHT CHECK PROCESS

Thereafter, a weight check process is executed. For the packed article, a weight check process different from the one explained above is executed. For convenience, the weight check process described above is referred as the first weight check process and a weight check for the "Packed Food" is referred as the second weight check process.

As described above, the article assignment buttons B22 which consist of six kinds of touch buttons of "Vegetables", "Fruits", "Prepared Food", "Fish", "Others" and "Packed Food" are displayed on the user area B2 in the first basic display B. An article to be assigned by the article assignment buttons B22 is not set in the PLU file PF, but is a non-PLU article set in the category file. In these articles, the non-PLU articles assigned based on the assignment of the article assignment buttons B22 consisting of "Vegetables", "Fruits", "Prepared Food", "Fish", and "Others" sets corresponding weight data in the category file. Thus, the first weight check process is enabled. Meanwhile, a non-PLU article assigned based on the assignment of the article assignment button B22 consisting of "Packed Food" does not set corresponding weight data in the category file. Therefore, the first weight check process is not executed and thus the second weight check process is executed.

At the second weight check process, it is determined whether an article is placed on the placing table 303a based on an input from the scale device 301. That is, at the scale device 301, if a weighed weight increases even a little, it is determined that a registered packed article is correctly bagged into the shopping bag 401 or my basket, or is placed on the temporary placing table 306. In other words, a rough weight check process is executed.

In this case, in a stand-by display (the second in rows and the third in columns from left in Fig. 21) where the reading confirmation display C is lapped over the user area B2 in the basic display B, the guidance display area B1 displays the same guidance as the first weight check that "Please bag the article into the shopping bag or my basket".

Even though, the self-checkout operation at the self-checkout terminal 101 in the embodiment of the present invention bases the operation that the barcode affixed to the article is read by the barcode scanner 203, and the read article is bagged into the shopping bag 401 or my basket or placed on the temporary placing table 306. Therefore, as operation different from the normal operation is required for the non-PLU article, which is registered based on an assignment of the article assignment buttons B22. Due to such difference in operation, after the customer bags the registered packed article into the shopping bag 401 or my basket, or places the article on the temporary placing table 306, he/she might bag an unregistered article into the shopping bag 401 or my basket, or placed on the temporary placing table 306, in other words, it is expected to happen "placing twice". When such "placing twice" happens, the article which is included in the non-PLU article and is executed the first weight check process would be an error, thus no big problem happens.

Meanwhile, for the article included in the non-PLU article, a packed article as the example in the embodiment of the present invention, when the second weight check process is executed, the "placing twice" of the unregistered article cannot be taken as an error in order to execute the second weight check process, so to speak, the rough weight check process for determining whether the article is placed on the placing table 303a or not. In this case, after a weight increase is confirmed based on an input from the scale device 301 and further weight increase is confirmed, there might be a measure to take it as an error. However, if do so, the scale device 301 cannot execute weighing until shaking is settled for a certain period after an article is placed on the placing table 303a. Therefore, it is necessary to set a stand-by period until the shaking stops, and the "placing twice" happened during this period cannot be taken as an error.

Therefore, in the embodiment of the present invention, whether the weight weighed by the scale device 301 exceeds an established value or not for the article, which executes the second weight check, and if it exceeds, it is taken as an error. Thereby, when the "placing twice" happens followed by a packed article, if the total weight exceeds an established weight, it is possible to be error. If such error happens, the controller 253 may let the weight error display D1 to be displayed over the basic display B on the LCD210, for example.

### (6) Cancellation Assignment

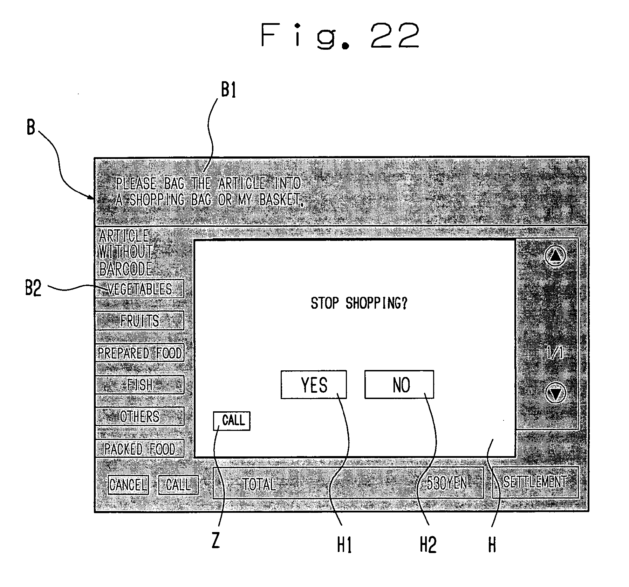

Fig.22 is an exemplary diagram showing an example of a cancellation display which appears when a cancellation button Y is touched. When the cancellation button Y appeared in each display is touched and assigned through the touch panel 211, the controller 253 generates a cancellation display H as shown in Fig. 22, reduces the brightness of the whole basic display B, and displays the generated cancellation display H to lap over the basic display B. The cancellation display H displays an explanation of "Stop shopping?" with two selection buttons H1 and H2 showing "Yes" and "No". A "Calling" button Z is also displayed. When the selection button H1 showing "Yes" is touched and assigned, the controller 253 stops all processes and returns the display on the LCD210 to the first initial guidance display A (the first in rows and the first in columns from left in Fig. 10). Meanwhile, when the selection button H2 showing "No" is touched and assigned through the touch panel 211, the controller 253 return the process to an immediate previous status.

### (7) Calling Assignment

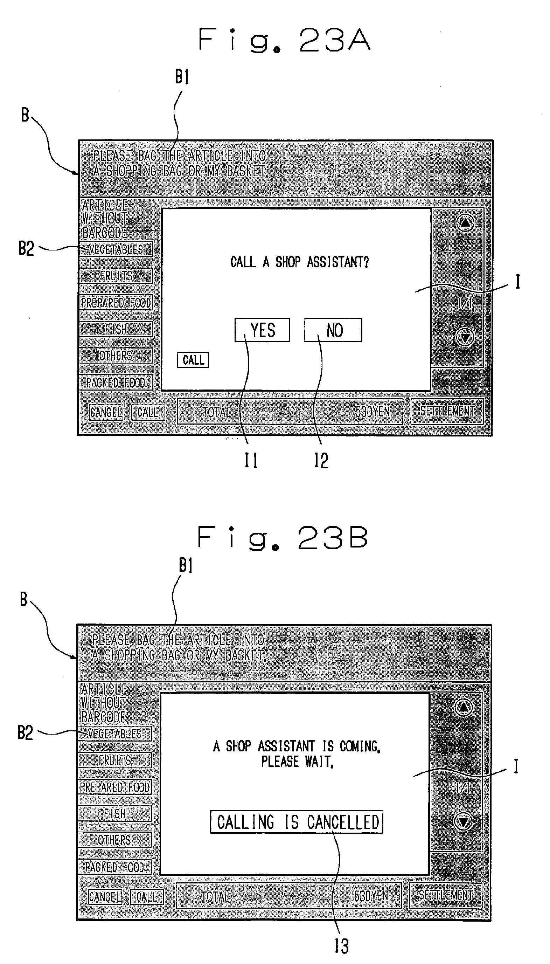

Fig. 23 is an exemplary diagram showing an example of a shop assistant calling display appears when the calling button Z is assigned. When the calling button Z displayed on each display is touched and assigned through the touch panel 211, the controller 253 generates a shop calling display I shown in Fig. 23 (A), reduces the brightness of the whole basic display B, and displays the generated shop assistant calling display I to lap over the user area B2. The shop assistant calling display I displays an explanation of "Call a shop assistant?" with two selection buttons I1 and I2 showing "Yes" and "No". When the selection button I1 showing "Yes" is touched and assigned through the touch panel 211, the controller 253 lets the shop assistant calling display I to transit to a display shown in Fig. 23(B). The shop assistant calling display I shown in Fig. 23 (B) displays an explanation that "A shop assistant is coming. Please wait." With a calling cancellation button I3 showing "Calling is cancelled." Is displayed. Here, when the selection button I1 showing "Yes" is touched and assigned through the touch panel 211, the controller 253 execute a calling process of a shop assistant. As the calling process, the controller 253 outputs a shop assistant calling information towards the assigned attendant terminal 501. Meanwhile, when the selection button I2 showing "No" is touched and assigned through the touch panel 211, the controller 253 stops the shop assistant calling process and returns the process to an immediate previous status.

### (8) Settlement

Go back to the explanation based on Fig. 10. A settlement button B23 showing "Settlement" is displayed on the user area B2 in the basic display B (the first in rows and the second in columns from left in Fig. 10). An assignment of the settlement button B23 means a closing assignment. Thus, when the settlement button B23 is touched and assigned through the touch panel 211, the controller 253 executes a settlement process. That is, the controller 253 generates a settlement display J and displays it on the user area B2 (the third in rows and the second in columns from left in Fig. 10). The settlement display J includes a display of total sum, selection buttons J1 to J5 for paying methods, a return button J6 showing "Return to the detailed display" for returning to the first initial display B (the third in rows and the second in columns from left in Fig. 10) . The selection button J1 is for cash, the selection button J2 is for a credit card, the selection button J3 is for a non-contacting IC card of an electronic money type, the selection button J4 is for a non-contacting IC card charging to a bank account and the selection button J5 is for a gift coupon. Thereby, when the customer touches and assigns the settlement button B23 through the touch panel 211 at the settlement terminal 201, the controller 253 executes a settlement process by cash, an electro-magnetic card such as a credit card, an electronic money type non-contacting IC card, or a bank account charging type non-contacting IC card, for the settled amount obtained through the article sales data processing.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A self-checkout terminal, comprising:
a settlement terminal (201) including a user interface (203, 210, 211) for inputting an article code;
a scale device (301) providing a placing part (303a, 306) for placing an article, an article code of which is input through the user interface, for measuring a weight of the article placed on the placing part, and for transmitting the measured weight value to the settlement terminal,
**characterized in that** comprising:
means for storing a weight value, into a memory (254, WCF), transmitted from the scale device as a former weight under a predetermined condition; and
means for executing, when an article code is input through the user interface,
i) a search process for searching a corresponding price and a weight range from an article data file (WDF) which rewritably stores a price and a weight corresponding to each article code;
ii) a weight check process for determining whether a difference of weight value between a weight value transmitted from the scale device and a former weight stored in the memory is included within a weight range acquired by the searched process; and
iii) an article information registration process for storing article information which includes the input article code and the searched price in the memory on condition that it is determined that the weight value is included within the weight range as a result of the weight check process,
wherein the predetermined condition includes one of following conditions: when it is determined that the weight value is included within the weight range as a result of the weight check process, and when it is determined that the weight value received from the scale device decreases with respect to the former weight.

2. The self-checkout terminal according to claim 1, further comprising:
means for storing, when it is determined that a weight value received from the scale device decreases with respect to the former weight, an archival record of the decreased weight in the memory;
means for executing, when it is determined that a weight value received from the scale device increases with respect to a former weight between the article information registration process and a next input of an article code of an article, a first determination process for determining whether the increased weight accords with one decreased weight value or combination value of more than two decreased weight value in the memory in order to presume whether an article, which was removed from the placing part and is a decrease cause, is placed on the placing part again,; and
means for storing a weight value transmitted from the scale device as a former weight in the memory when a result of the first determination process is to accord with.

3. The self-checkout terminal according to claim 2, further comprising:
an announcement part (217) for executing an error announcement; and
means for allowing the announcement part to execute an error announcement, and for canceling a transition to the article information registration process when a result of the first determination process is not to accord with.

4. The self-checkout terminal according to claim 1, further comprising:
means for storing, when it is determined that a weight value received from the scale device decreases with respect to a former weight, an archival record of the decreased weight;
means for executing, when it is determined that a weight value is not included within the weight range as a result of the weight check process, a second determination process for determining whether a difference of weight value between the weight value transmitted from the scale device, and a weight value obtained by adding one or more weight values obtained from the archival record of the decreased weight to a former weight stored in the memory is included within the weight range obtained by the search process in order to presume whether an article, which was removed from the placing part and is a cause of decrease of a former weight, is returned to the placing part again with an article under the weight check process; and
means for storing a weight value transmitted from the scale device as a former weight when a result of the second determination process is to be included.

5. The self-checkout terminal according to claim 1, further comprising:
an announcement part (217) for executing an error announcement; and
means for allowing the announcement part to execute an error announcement, and for canceling a transition to the article information registration process.

6. The self-checkout terminal according to claim 1, further comprising:
means for storing, when it is determined that a weight value received from the scale device decreases with respect to a former weight, an archival record of the decreased weight in the memory;
means for executing, when it is determined that the weight value is not included within the weight range as a result of the weight check process, a third determination process for determining whether an increased weight value accords with one or more weight values obtained from the archival record of the decreased weight in order to presume whether only an article, which was removed from the placing part and is a cause of decrease of the former weight, is placed on the placing part again; and
means for storing a weight value transmitted from the scale device in the memory as a former weight when a result of the third determination process is to accord with.

7. The self-checkout terminal according to claim 6, further comprising:
an announcement part (217) for executing an error announcement; and
means for allowing the announcement part to execute an error announcement, and for canceling a transition to the article information registration process when a result of the third determination process is not to accord with.

8. A self-checkout terminal, comprising:
a settlement terminal (201) including a user interface (203, 210, 211) for inputting an article code;
a scale device (301) providing a placing part (303a, 306) for placing an article, an article code of which is input through the user interface, and for measuring a weight of the article placed on the placing part and transmitting the measured weight value to the settlement terminal;
an announcement part (217) for executing an error announcement,
**characterized in that** comprising:
means for storing a weight value, into a memory (254, WCF), transmitted from the scale device as a former weight under a predetermined condition;
means for executing, when an article code is input through the user interface,
i) a search process for searching a corresponding price and a weight range from an article data file (WDF) which rewritably stores a price and a weight corresponding to each article code;
ii) a weight check process for determining whether a difference of weight value between a weight value transmitted from the scale device and a former weight stored in the memory is included within a weight range acquired by the searched process; and
iii) an article information registration process for storing article information which includes the input article code and the searched price in the memory on condition that it is determined that the weight value is included within the weight range as a result of the weight check process,
means for canceling a transition to the article information registration process by allowing the announcement part to execute an error announcement when it is determined that a weight value received from the scale device decreases with respect to a former weight after an input of an article code through the user interface;
means for resuming, when a weight value received from the scale device after the error announcement increases, a transition to the article information registration process by executing the weight check process using the increased weight value;
wherein the predetermined condition includes when it is determined that the weight value is included within the weight range as a result of the weight check process.

9. The self-checkout terminal according to claim 8, wherein when a weight value received from the scale device after the error announcement is returned to a former weight, the error announcement and a suspension of an article sales data processing are cancelled.

10. The self-checkout terminal according to claim 8, wherein when a determination result that the weight value is included within the weight range as a result of the weight check process is not obtained, a transition to the article information registration process is cancelled until a determination result that the weight value is included within the weight range is obtained.

11. The self-checkout terminal according to claim 8, further comprising:
means for allowing the announcement part to execute an error announcement, and for suspending a progress of a following article sales data processing when it is determined that a weight value received from the scale device decreases with respect to a former weight before an input of an article code through the user interface; and
means for canceling the error announcement and the suspension of the article sales data processing when a weight value received from the scale device after the error announcement is returned to a former weight.
